(19) **Europäisches Patentamt European Patent Office Office européen des brevets**

(11) **EP 3 001 740 A1**

(12) **EUROPEAN PATENT APPLICATION**
published in accordance with Art. 153(4) EPC

(43) Date of publication:
**30.03.2016 Bulletin 2016/13**

(21) Application number: **13888599.1**

(22) Date of filing: **01.07.2013**

(51) Int Cl.:
**H04W 56/00** *(2009.01)*

(86) International application number:
**PCT/CN2013/078572**

(87) International publication number:
**WO 2015/000102 (08.01.2015 Gazette 2015/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Huawei Technologies Co., Ltd.
Longgang District
Shenzhen, Guangdong 518129 (CN)**

(72) Inventor: **HU, Jun
Shenzhen
Guangdong 518129 (CN)**

(74) Representative: **Thun, Clemens
Mitscherlich PartmbB
Patent- und Rechtsanwälte
Sonnenstraße 33
80331 München (DE)**

(54) **AIR INTERFACE SYNCHRONIZATION METHOD, BASE STATION, CONTROL APPARATUS AND WIRELESS COMMUNICATION SYSTEM**

(57) The present invention discloses an air-interface-based synchronization method, a base station, a control apparatus of the base station, and a wireless communications system. A time difference between base stations is acquired by means of signaling interworking in a non-contention based random access process of user equipment handed over between the base stations, and a time adjustment value of a non-reference base station is acquired according to reference time of a reference base station, so that the non-reference base station performs time adjustment according to the time adjustment value, thereby implementing time synchronization between the non-reference base station and the reference base station. The present invention uses an existing wireless network to simply and effectively implement air-interface-based synchronization between base stations without using an expensive synchronization device, thereby reducing construction costs and maintenance costs and achieving technical effects of cost-effectiveness and convenience.

```
                                                    ┌─ S301
┌─────────────────────────────────────────────┐
│ Acquire at least one time difference, where  │
│ the time difference is a time difference     │
│ between a first base station and a second    │
│ base station                                 │
└─────────────────────────────────────────────┘
                      │
                      ▼                              ┌─ S302
┌─────────────────────────────────────────────┐
│ Acquire a time adjustment value of the       │
│ second base station according to the at      │
│ least one time difference and reference time │
│ of the first base station, where the first   │
│ base station is a reference base station,    │
│ and the second base station is a non-        │
│ reference base station                       │
└─────────────────────────────────────────────┘
                      │
                      ▼                              ┌─ S303
┌─────────────────────────────────────────────┐
│ Send the time adjustment value to the        │
│ second base station                          │
└─────────────────────────────────────────────┘
```

FIG. 3

**Description**

**TECHNICAL FIELD**

The present invention relates to the field of wireless communications, and in particular, to an air-interface-based synchronization method, a base station, a control apparatus, and a wireless communications system.

**BACKGROUND**

With increasing requirements for wireless network capacity, to obtain higher network capacity, sites are deployed more densely. For a Long Term Evolution (Long Term Evolution, LTE) system, regardless of a homogeneous network (Homogenous Network, HomNet) or a heterogeneous network (Heterogeneous Network, HomNet), because sites are deployed more densely, interference between cells is more severe. As a result, a throughput of users on a border of the cells decreases, and normal work of edge users is affected in a severe case. Staggering resources of the edge users can resolve the interference problem between the cells. The prior-art method is using inter-cell time domain interference coordination. With the help of coordination of the use of subframes between different cells, staggering of interference between the cells is implemented. This is specifically implemented by using an almost blank subframe (Almost Blank Subframes, ABS) technology. An ABS subframe sends no data at all, and transmits only a reference signal. Some subframes for an interfering cell are set as ABS subframes, an interfered-with cell is hardly interfered with in the corresponding subframes.

A prerequisite of implementing the inter-cell time domain interference coordination is time synchronization between cells. A general method is performing the time synchronization between the cells by using a global positioning system (Global Positioning System, GPS) to, which requires that GPS be configured for each site. The GPS-based synchronization technology is referred to as a hard synchronization technology.

Performing the time synchronization by using the GPS has problems of high construction costs and high maintenance costs.

**SUMMARY**

Embodiments of the present invention provide a processing method for implementing air-interface-based time synchronization between base stations, an apparatus, and a wireless communications system, so as to resolve problems of high construction costs and high maintenance costs in the prior art that exist when time synchronization between base stations is performed by using GPS.

The embodiments of the present invention may be specifically implemented by using the following technical solutions:

According to a first aspect, a central controller apparatus is provided, where the apparatus includes:

a time adjustment value processing unit, configured to: acquire at least one time difference, and acquire a time adjustment value of a second base station according to the at least one time difference and reference time of a first base station, where the time difference is a time difference between the first base station and the second base station, and the at least one time difference includes a first time difference, where the first time difference is a time difference acquired according to non-contention based random access of first user equipment UE handed over between the first base station and the second base station, the first base station is a reference base station, and the second base station is a non-reference base station; and

an adjustment value sending unit, configured to send the time adjustment value acquired by the time adjustment value processing unit to the second base station.

A processing method of a central controller in air-interface-based synchronization is further provided, where the method includes:

acquiring, by the central controller, at least one time difference, where the time difference is a time difference between the first base station and the second base station, and the at least one time difference includes a first time difference, where the first time difference is a time difference acquired by the first base station according to non-contention based random access of first user equipment UE handed over between the first base station and the second base station, the first base station is a reference base station, and the second base station is a non-reference base station; acquiring, by the central controller, a time adjustment value of the second base station according to the at least one time difference and reference time of the first base station; and sending, by the central controller, the time adjustment value to the second base station.

A central controller apparatus is further provided, where the apparatus includes:

a processor, a memory, and an interface, where
the interface is configured to perform information exchange with a base station; and
the memory is configured to store program code, and the processor invokes the program code stored in the memory, to execute a processing method of the central controller in air-interface-based synchronization.

According to a second aspect, an apparatus of a first base station is provided, where the apparatus includes:

a time difference calculation unit, configured to acquire a first time difference, where the first time difference is a time difference acquired according to non-contention based random access of first user equipment UE handed over between the first base station and a second base station; and
a time difference sending unit, configured to send the first time difference acquired by the time difference calculation unit to a central controller, so that the central controller acquires a time adjustment value of the second base station according to acquired at least one time difference and reference time of the first base station, where the at least one time difference includes the first time difference, the first base station is a reference base station, and the second base station is a non-reference base station.

A processing method of a first base station in air-interface-based synchronization is further provided, where the method includes:

acquiring, by the first base station, a first time difference, where the first time difference is a time difference acquired according to non-contention based random access of first user equipment UE handed over between the first base station and a second base station, the first base station is a reference base station, and the second base station is a non-reference base station; and
sending, by the first base station, the first time difference to a central controller, so that the central controller acquires a time adjustment value of the second base station according to acquired at least one time difference and reference time of the first base station, where the at least one time difference includes the first time difference.

An apparatus of a first base station is further provided, where the apparatus includes:

a processor, a memory, a transceiver, and an interface, where
the interface is configured to perform information exchange between base stations, information exchange between a base station and a core network, or information exchange with a central controller;
the transceiver is configured to perform information exchange with user equipment; and
the memory is configured to store program code, and the processor invokes the program code stored in the memory, to execute a processing method of the first base station in air-interface-based synchronization.

According to a third aspect, an apparatus of a second base station is provided, where the apparatus includes:

an adjustment value acquiring unit, configured to receive a time adjustment value sent by a central controller, where the time adjustment value is a time adjustment value of the second base station that is acquired by the central controller according to at least one time difference and reference time of a first base station, and the at least one time difference includes a first time difference, where the first time difference is a time difference acquired according to non-contention based random access of first user equipment UE handed over between the first base station and the second base station, the first base station is a reference base station, and the second base station is a non-reference base station; and
a time adjustment unit, configured to perform time adjustment according to the time adjustment value acquired by the adjustment value acquiring unit.

A processing method of a second base station in air-interface-based synchronization is further provided, where the method includes:

acquiring, by the second base station, a time adjustment value sent by a central controller, where the time adjustment value is obtained by the central controller according to at least one time difference and reference time of a first base station, and the at least one time difference includes a first time difference, where the first time difference is a time difference acquired according to non-contention based random access of first user equipment UE handed over between the first base station and the second base station, the first base station is a reference base station, and the second base station is a non-reference base station; and
performing, by the second base station, time adjustment according to the time adjustment value.

An apparatus of a second base station is further provided, where the apparatus includes:

a processor, a memory, a transceiver, and an interface, where
the interface is configured to perform information exchange between base stations, information exchange between a base station and a core network, or information exchange with a central controller;
the transceiver is configured to perform information exchange with user equipment; and
the memory is configured to store program code, and the processor invokes the program code stored in the memory, to execute a processing method of the second base station in air-interface-based synchronization.

According to a fourth aspect, an apparatus of a first base station is provided, where the apparatus includes:

a time difference calculation unit, configured to acquire a first time difference, where the first time difference is a time difference acquired according to non-contention based random access of first user equipment UE handed over between the first base station and the second base station; and
a time difference sending unit, configured to send the first time difference acquired by the time difference calculation unit to the second base station, so that the second base station acquires a time adjustment value of a non-reference base station according to acquired at least one time difference and reference time of a reference base station, where the at least one time difference includes the first time difference, and the reference base station is the first base station and the non-reference base station is the second base station, or the reference base station is the second base station and the non-reference base station is the first base station.

A processing method of a first base station in air-interface-based synchronization is further provided, where the method includes:

acquiring, by the first base station, a first time difference, where the first time difference is a time difference acquired according to non-contention based random access of first user equipment UE handed over between the first base station and a second base station; and
sending, by the first base station, the first time difference to the second base station, so that the second base station acquires a time adjustment value of a non-reference base station according to acquired at least one time difference and reference time of a reference base station, where the at least one time difference includes the first time difference, and the reference base station is the first base station and the non-reference base station is the second base station, or the reference base station is the second base station and the non-reference base station is the first base station.

An apparatus of a first base station is further provided, where the apparatus includes:

a processor, a memory, a transceiver, and an interface, where
the interface is configured to perform information exchange between base stations or information exchange between a base station and a core network;
the transceiver is configured to perform information exchange with user equipment; and
the memory is configured to store program code, and the processor invokes the program code stored in the memory, to execute a processing method of the first base station in air-interface-based synchronization.

According to a fifth aspect, an apparatus of a second base station is provided, where the apparatus includes:

a time adjustment value processing unit, configured to: acquire at least one time difference, and acquire a time adjustment value of a non-reference base station according to the at least one time difference and reference time of a reference base station, where the time difference is a time difference between the first base station and the second base station, and the at least one time difference includes a first time difference, where the first time difference is a time difference acquired according to non-contention based random access of first user equipment UE handed over between the first base station and the second base station, the reference base station is the second base station, and the non-reference base station is the first base station, or the reference base station is the first base station, and the non-reference base station is the second base station; and
an adjustment value sending unit, configured to send the time adjustment value acquired by the time adjustment value processing unit to the non-reference base station.

A processing method of a second base station in air-interface-based synchronization is further provided, where the method includes:

acquiring, by the second base station, at least one time difference, where the time difference is a time difference between a first base station and the second base station, and the at least one time difference includes a first time difference, where the first time difference is a time difference acquired according to non-contention based random access of first user equipment UE handed over between the first base station and the second base station;

acquiring, by the second base station, a time adjustment value of a non-reference base station according to the at least one time difference and reference time of a reference base station, where the reference base station is the second base station, and the non-reference base station is the first base station, or the reference base station is the first base station, and the non-reference base station is the second base station; and

sending, by the second base station, the time adjustment value to the non-reference base station, where when the reference base station is the second base station, the time adjustment value is sent to the first base station, or when the reference base station is the first base station, the time adjustment value is sent to the second base station.

An apparatus of a second base station is further provided, where the apparatus includes:

a processor, a memory, a transceiver, and an interface, where

the interface is configured to perform information exchange between base stations or information exchange between a base station and a core network;

the transceiver is configured to perform information exchange with user equipment; and

the memory is configured to store program code, and the processor invokes the program code stored in the memory, to execute a processing method of the second base station in air-interface-based synchronization.

It can be seen from the foregoing descriptions of the embodiments that, in the implementation manners of the present invention, a time difference between base stations is acquired by means of signaling interworking in a non-contention based random access process of user equipment handed over between the base stations, and a time adjustment value of a non-reference base station is acquired according to reference time of a reference base station, so that the non-reference base station performs time adjustment according to the time adjustment value, thereby implementing time synchronization without using an expensive synchronization device, which reduces related maintenance. The present invention uses an existing wireless network resource to simply and effectively achieve a purpose of air-interface-based synchronization of base stations, thereby achieving technical effects of cost-effectiveness and convenience.

## BRIEF DESCRIPTION OF DRAWINGS

FIG. 1 is a schematic diagram of a wireless communications network according to an embodiment of the present invention;

FIG. 2 is a schematic structural diagram of an air-interface-based synchronization apparatus according to an embodiment of the present invention;

FIG. 3 illustrates a processing method of a central controller in air-interface-based synchronization according to an embodiment of the present invention;

FIG. 4 illustrates a processing method of a base station in air-interface-based synchronization according to an embodiment of the present invention;

FIG. 5 illustrates a processing method of a base station in air-interface-based synchronization according to an embodiment of the present invention;

FIG. 6 illustrates a method for acquiring a time difference by means of inter-station handover according to an embodiment of the present invention;

FIG. 7 illustrates a method for acquiring a time difference by means of inter-station handover according to an embodiment of the present invention;

FIG. 8 illustrates another processing method of a base station in air-interface-based synchronization according to an embodiment of the present invention;

FIG. 9 illustrates another processing method of a base station in air-interface-based synchronization according to an embodiment of the present invention;

FIG. 10 is another schematic structural diagram of an air-interface-based synchronization apparatus according to an embodiment of the present invention;

FIG. 11 is a schematic diagram of a central controller apparatus in air-interface-based synchronization according to an embodiment of the present invention;

FIG. 12 is a schematic diagram of an apparatus of a base station in air-interface-based synchronization according to an embodiment of the present invention;

FIG. 13 is a schematic diagram of an apparatus of a base station in air-interface-based synchronization according to an embodiment of the present invention;

FIG. 14 is a schematic diagram of another apparatus of a base station in air-interface-based synchronization according to an embodiment of the present invention; and

FIG. 15 is a schematic diagram of another apparatus of a base station in air-interface-based synchronization according to an embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall fall within the protection scope of the present invention.

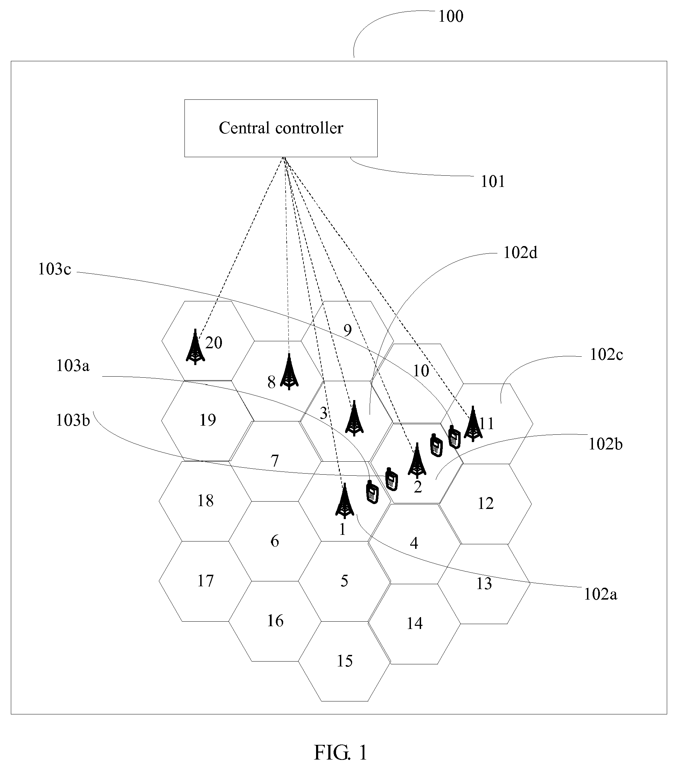

FIG. 1 shows a wireless communications network 100 according to an embodiment of the present invention. The network may be a Long Term Evolution (Long Term Evolution, LTE) network, or may be an LTE-Advanced network. The wireless communications network includes several base stations 102 (such as 102a, 102b, 102c, and 102d), a central controller 101, and another network entity (for example, a core network), so as to support communication of several user equipments 103 (such as 103a, 103b, and 103c), where a core network device is not shown in FIG. 1.

The base station 102 is an evolved NodeB (evolved NodeB, eNodeB) in LTE. One base station may support/manage one or more cells. Each base station may serve multiple UEs. UE selects a cell to initiate network access, and performs a voice service and/or a data service with the base station 102.

The user equipment (User Equipment, UE) 103 may also be referred to as a mobile terminal (Mobile Terminal, MT), a mobile station (Mobile Station, MS), or the like.

To complete time synchronization between all base stations on a network, a base station may be selected and the base station is used as a reference point for adjusting time of another base station, to keep time consistent with the base station. The base station that is selected as the reference point is referred to as a reference base station, and other base stations are referred to as non-reference base stations.

The central controller 101 may perform information exchange with the base stations, acquire at least one time difference between the base stations, acquire a time adjustment value of a non-reference base station relative to a reference base station according to the acquired at least one time difference and reference time of the reference base station, and send the time adjustment value to the non-reference base station, so that the non-reference base station performs time adjustment according to the time adjustment value to keep synchronous with the reference base station. The central controller 101 may be independent of the base stations and serve as an independent network element, or may be located within a base station and serve as a functional entity of the base station.

## Embodiment 1

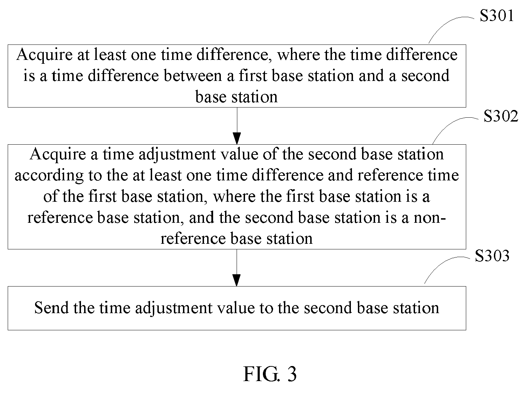

FIG. 3 illustrates a processing method of a central controller in air-interface-based synchronization according to an embodiment of the present invention. Detailed descriptions are as follows:

S301: Acquire at least one time difference, where the time difference is a time difference between a first base station and a second base station.

The central controller acquires the at least one time difference, where the time difference is the time difference between the first base station and the second base station. The at least one time difference includes a first time difference, where the first time difference is a time difference acquired according to non-contention based random access of first UE handed over between the first base station and the second base station, and the first time difference may be a time difference between the first base station and the second base station acquired by the first base station according to a first receiving moment and a second receiving moment, where the first receiving moment is a moment at which the first base station detects a first random access preamble, and the second receiving moment is a moment at which the second base station detects the first random access preamble. The first random access preamble is a non-contention based random access preamble that is used to perform handover of the first UE between the first base station and the second base station.

When the first UE is handed over from the first base station to the second base station, the first UE initiates non-contention based random access to the second base station according to the non-contention based random access preamble. The first base station and the second base station separately acquire, by detecting a random access preamble, a moment at which the random access preamble is received, where the first base station may detect the non-contention based random access preamble by enabling detection of a random access preamble. The second base station sends the second receiving moment to the first base station; the first base station acquires the first time difference between the first base station and the second base station according to the first receiving moment and the second receiving moment and sends the first time difference to the central controller; and the central controller acquires the first time difference from the first base station.

If there are multiple UEs, the central controller may acquire multiple time differences by using the foregoing process.

Optionally, the first base station may further acquire a first transmission delay from the first UE to the first base station. The second base station may also acquire a second transmission delay from the first UE to the second base station. The first base station may acquire the first time difference between the first base station and the second base station according to the first receiving moment, the first transmission delay, the second receiving moment, and the second transmission delay, that is, the first time difference may be a time difference between the first base station and the second base station that is acquired according to the first receiving moment, the first transmission delay, the second receiving moment, and the second transmission delay.

For UE handed over from the second base station to the first base station, the central controller may acquire a time difference between the base stations from the second base station.

S302: Acquire a time adjustment value of the second base station according to the at least one time difference and reference time of the first base station, where the first base station is a reference base station, and the second base station is a non-reference base station.

The central controller determines a time adjustment value of another non-reference base station according to reference time of the reference base station in a system, so that the non-reference base station performs time adjustment according to the time adjustment value to keep time synchronous with the reference base station.

If there is only one time difference, the central controller acquires the time adjustment value of the second base station relative to the first base station according to the reference time of the first base station and the acquired time difference, that is, acquires the time adjustment value of the non-reference base station relative to the reference base station.

If the time adjustment value processing unit acquires at least two time differences, the central controller processes the at least two time differences to obtain an average time difference of the second base station relative to the first base station, where the foregoing processing includes averaging processing, or performing averaging processing on two time differences between which there is smallest difference, or removing a largest value and a smallest value of the multiple time differences and performing averaging processing on remaining time differences; and acquires the time adjustment value of the second base station according to a time difference obtained after the averaging processing and the reference time of the first base station.

S303: Send the time adjustment value to the second base station.

After acquiring the time adjustment value of the non-reference base station relative to the reference base station, the central controller sends the time adjustment value to the non-reference base station, so that the non-reference base station performs time adjustment according to the time adjustment value to keep time synchronous with the reference base station.

When the reference base station is the first base station, the central controller sends the time adjustment value to the second base station.

When the central controller is located within a base station, the foregoing process is executed by the base station.

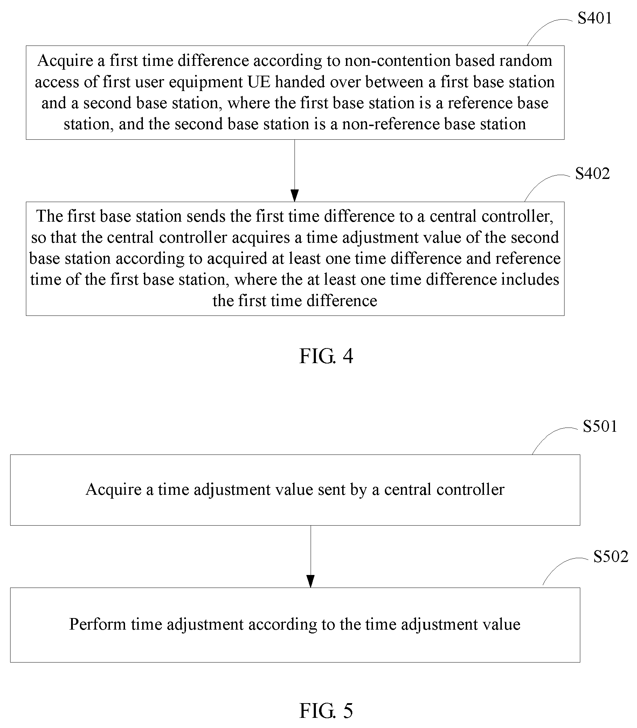

FIG. 4 illustrates a processing method of a first base station in air-interface-based synchronization according to this embodiment of the present invention. Detailed descriptions are as follows:

S401: Acquire a first time difference according to non-contention based random access of first UE handed over between the first base station and a second base station, where the first base station is a reference base station, and the second base station is a non-reference base station.

The first base station and the second base station separately acquire, according to the non-contention based random access of the first UE handed over between the first base station and the second base station, a receiving moment by detecting a random access preamble of the first UE, where the first base station calculates the first time difference according to the acquired receiving moments.

The first time difference may be a time difference acquired according to a first receiving moment and a second receiving moment, where the first receiving moment is a moment at which the first base station detects a first random access preamble, and the second receiving moment is a moment at which the second base station detects the first random access preamble.

The second base station is a target base station of the first UE, may detect the first random access preamble, and acquire the second receiving moment. The first base station enables detection of a random access preamble, may also detect the first random access preamble, and acquires the first receiving moment.

The first base station receives the second receiving moment sent by the second base station, and the first base station calculates the first time difference between the first base station and the second base station according to the first receiving moment and the second receiving moment.

Optionally, the first base station may further acquire a first transmission delay from the first UE to the first base station. The second base station may also acquire a second transmission delay from the first UE to the second base station. The first base station may calculate the first time difference between the first base station and the second base station according to the first receiving moment, the first transmission delay, the second receiving moment, and the second transmission delay.

S402: The first base station sends the first time difference to a central controller, so that the central controller acquires a time adjustment value of the second base station according to acquired at least one time difference and reference time of the first base station, where the at least one time difference includes the first time difference.

FIG. 5 illustrates a processing method of a second base station in air-interface-based synchronization according to this embodiment of the present invention. Detailed descriptions are as follows:

S501: Acquire a time adjustment value sent by a central controller.

The second base station receives the time adjustment value sent by the central controller, where the time adjustment value is a time adjustment value, acquired by the central controller according to at least one time difference between a first base station and the second base station and reference time of the first base station, of the second base station relative to the first base station. The at least one time difference includes a first time difference, where the first time difference is sent by the first base station to the central controller and is a time difference acquired according to non-contention based random access of first UE handed over between the first base station and the second base station.

S502: Perform time adjustment according to the time adjustment value.

The second base station performs time adjustment according to the acquired time adjustment value to complete time synchronization.

It can be understood that, the foregoing processing method of the central controller, the foregoing processing method of the first base station, and the foregoing processing method of the second base station are also applicable when UE is handed over from the second base station to the first base station. When the second base station is a reference base station and the first base station is a non-reference base station, the foregoing processing methods are also applicable.

In this embodiment, a time difference between base stations is acquired by means of signaling interworking in a non-contention based random access process of user equipment handed over between the base stations, and a time adjustment value of a non-reference base station is acquired according to reference time of a reference base station, so that the non-reference base station performs time adjustment according to the time adjustment value, thereby implementing time synchronization between the non-reference base station and the reference base station without using an expensive synchronization device, which reduces construction and maintenance costs and achieves technical effects of cost-effectiveness and convenience.


**Embodiment 2**

In a wireless communications system shown in FIG. 1, first UE is handed over from a first base station to a second base station.

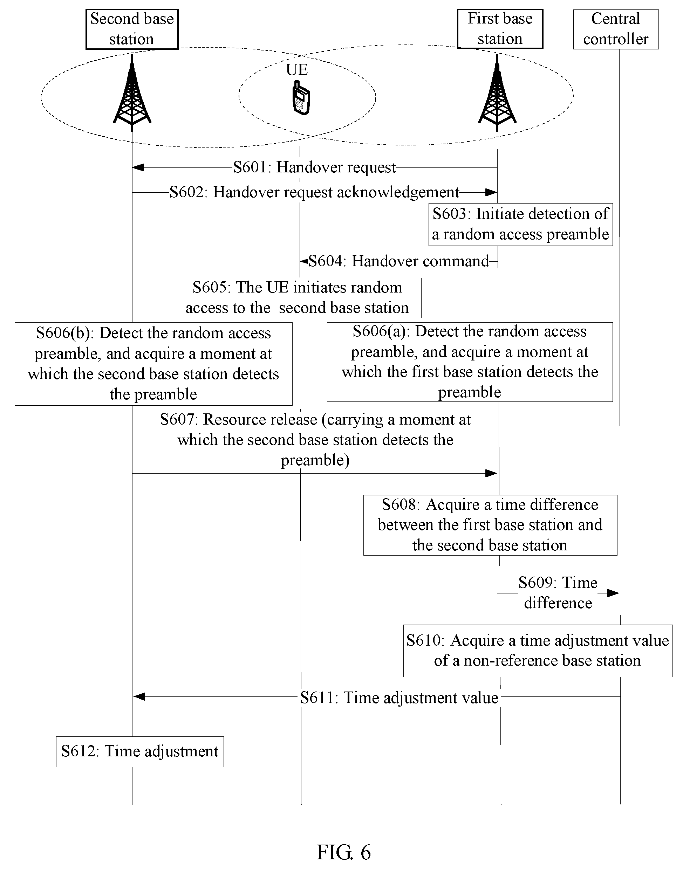

FIG. 6 illustrates a method for acquiring a time difference by means of inter-station handover according to this embodiment of the present invention. Detailed descriptions are as follows:

S601: The first base station selects the second base station as a target base station according to a neighboring cell measurement report of the first UE, and sends a handover request message to the second base station.

S602: After receiving the handover request message sent by the first base station, the second base station sends a handover request acknowledgement message to the first base station, where the handover request acknowledgement message carries an index of a first random access preamble that is allocated to the first UE by the second base station.

S603: After receiving the handover request acknowledgement message sent by the second base station, the first base station enables detection of a random access preamble.

S604: The first base station sends a handover command message to the first UE, where the handover command message carries the index of the first random access preamble that is allocated to the first UE by the second base station.

S605: After receiving the handover command message sent by the first base station, the first UE initiates random access to the second base station by using the first random access preamble according to the index, of the first random access preamble that is allocated to the first UE by the second base station, carried in the handover command message. Indexes of first random access preambles are in one-to-one correspondences with the first random access preambles.

Because the first base station enables detection of a random access preamble, the first base station may also detect the random access preamble that is used by the first UE to initiate random access to the second base station.

S606(a): The first base station detects the random access preamble and acquires a first receiving moment, where the first receiving moment is a moment at which the first base station detects the first random access preamble.

S606(b): The second base station detects the random access preamble and acquires a second receiving moment, where the second receiving moment is a moment at which the second base station detects the first random access preamble.

That the first base station enables detection of a random access preamble can be understood as follows: The first base station originally does not need to detect the first random access preamble, but to acquire a time difference between base stations by detecting a random access preamble by a base station, the first base station needs to be enabled to detect the first random access preamble.

There is no specified sequence between step S606(a) and step S606(b).

S607: The second base station sends the second receiving moment to the first base station, so that the first base station acquires the second receiving moment. Preferably, the second base station sends a user resource release message to the first base station after the first UE is handed over to the second base station, where the user resource release message carries the second receiving moment.

The first base station acquires the second receiving moment. Preferably, the first base station receives the user resource release message sent by the second base station and acquires the second receiving moment according to the user resource release message.

S608: The first base station calculates a first time difference between the first base station and the second base station according to the first receiving moment and the second receiving moment.

Optionally, the user resource release message carries the index of the first random access preamble. Before calculating the first time difference, the first base station compares an index of the random access preamble corresponding to the first receiving moment with an index of the random access preamble corresponding to the second receiving moment. If the two indexes are the same, the first base station calculates the first time difference. The first base station acquires the first time difference according to non-contention based random access of the first UE handed over between the first base station and the second base station.

The first time difference between the first base station and the second base station is calculated as follows:

$$\text{First time difference} = (\text{Second receiving moment} - \text{First receiving moment}); \text{ or}$$

$$\text{First time difference} = (\text{First receiving moment} - \text{Second receiving moment}).$$

The present invention sets no limitation on a manner of calculating a time difference between the first base station and the second base station provided that manners of calculating a time difference are consistent, for example, calculating a time difference of the first base station relative to the second base station.

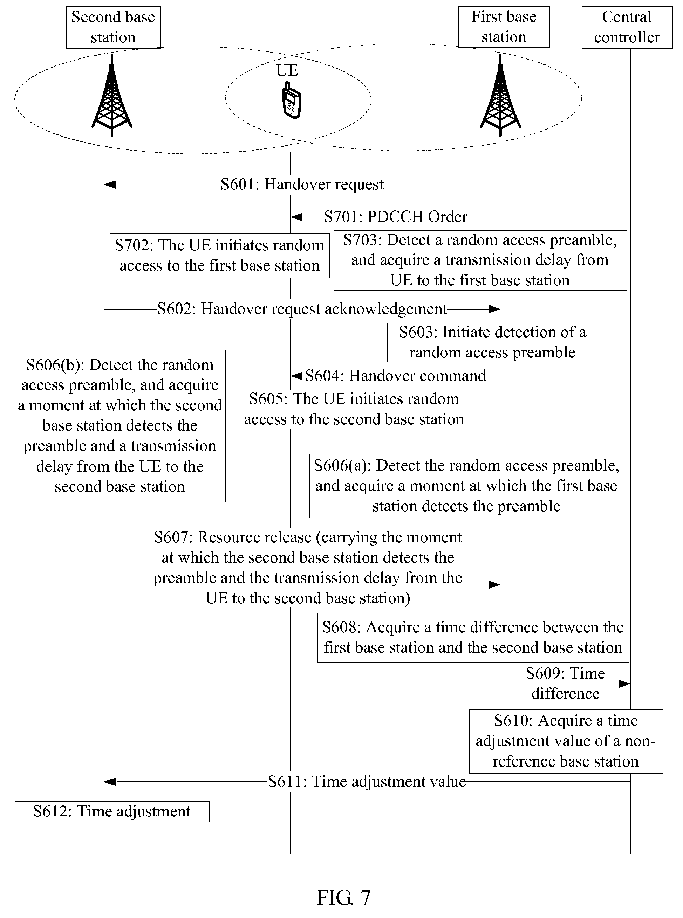

FIG. 7 illustrates another method for acquiring a time difference by means of inter-station handover according to this embodiment of the present invention. Detailed descriptions are as follows:

S601: The first base station selects the second base station as a target base station according to a neighboring cell measurement report of the first UE, and sends a handover request message to the second base station.

S701: After sending the handover request message to the second base station, the first base station triggers the first UE to initiate random access, that is, triggers the first UE to perform uplink resynchronization. Specifically, the first base station sends a physical downlink control channel order (Physical Downlink Control Channel Order, PDCCH Order) to the first UE, where the PDCCH Order carries an index of a second random access preamble that is allocated to the first UE by the first base station.

S702: After receiving the PDCCH Order, the first UE initiates active random access to the first base station according to the second random access preamble corresponding to the index, of the second random access preamble, carried in the PDCCH Order.

S703: The first base station detects a random access preamble. Because the first base station, in this case, is a base station that the first UE accesses, when detecting the second random access preamble, the first base station acquires a first transmission delay from the first UE to the first base station.

S602: After receiving the handover request message sent by the first base station, the second base station sends a handover request acknowledgement message to the first base station, where the handover request acknowledgement message carries an index of a first random access preamble that is allocated to the first UE by the second base station.

S603: After receiving the handover request acknowledgement message sent by the second base station, the first base station enables detection of a random access preamble.

S604: The first base station sends a handover command message to the first UE, where the handover command message carries the index of the first random access preamble that is allocated to the first UE by the second base station.

S605: After receiving the handover command message sent by the first base station, the first UE initiates random access to the second base station by using the first random access preamble according to the index, of the first random access preamble that is allocated to the first UE by the second base station, carried in the handover command message.

S606(a): The first base station detects the random access preamble and acquires a first receiving moment.

S606(b): The second base station detects the random access preamble and acquires a second receiving moment and a second transmission delay from the first UE to the second base station. There is no specified sequence between step S606(a) and step S606(b).

S607: The second base station sends the second receiving moment and the second transmission delay to the first base station. Preferably, the second base station sends a user resource release message to the first base station after the first UE is handed over to the second base station, where the user resource release message carries the second receiving moment and the second transmission delay.

The first base station acquires the second receiving moment and the second transmission delay. Preferably, the first base station receives the user resource release message sent by the second base station and acquires the second receiving moment and the second transmission delay according to the user resource release message.

S608: The first base station calculates a first time difference between the first base station and the second base station according to the first receiving moment, the first transmission delay, the second receiving moment, and the second transmission delay.

Optionally, the user resource release message carries the index of the first random access preamble. Before calculating the first time difference, the first base station compares an index of the random access preamble corresponding to the first receiving moment with an index of the random access preamble corresponding to the second receiving moment. If the two indexes are the same, the first base station calculates the time difference. The first base station acquires the first time difference according to non-contention based random access of the first UE handed over between the first base station and the second base station.

After the transmission delays are considered, the first time difference between the first base station and the second base station is calculated as follows:

$$\text{First time difference between the first base station and the second base station} = (\text{Second receiving moment} - \text{First receiving moment}) - (\text{Second transmission delay} - \text{First transmission delay}); \text{ or, First time difference} = (\text{First receiving moment} - \text{Second receiving moment}) - (\text{First transmission delay} - \text{Second transmission delay}).$$

Optionally, for macro-micro networking, the first time difference between the first base station and the second base station is calculated as follows:

$$\text{First time difference between the first base station and the second base station} = (\text{Second receiving moment} - \text{First receiving moment}) + (\text{Second transmission delay} - \text{First transmission delay}); \text{ or, First time difference} = (\text{First receiving moment} - \text{Second receiving moment}) + (\text{First transmission delay} - \text{Second transmission delay}).$$

It is required that manners of calculating a time difference between the first base station and the second base station remain consistent in all base stations, for example, a time difference of the first base station relative to the second base station is calculated in all the base stations.

For an LTE system, the first receiving moment and the second receiving moment include a system frame number, a subframe number, and an intra-subframe deviation.

The foregoing processing process is based on X2 handover, and a processing process based on S1 handover is similar to the processing process based on the X2 handover.

S609: The first base station sends the first time difference to a central controller. Specifically, the first base station sends a time difference report to the central controller, where the time difference report includes an identifier of the first base station, an identifier of the second base station, and the first time difference, where an identifier is used to identify a base station. Optionally, a sequence of the identifiers is used to indicate that the first time difference in the time difference report is a time difference of the first base station relative to the second base station, or that the first time difference is a time difference of the second base station relative to the first base station.

If there are multiple UEs handed over from the first base station to the second base station, the first base station acquires multiple time differences according to the foregoing method.

Optionally, the first base station may send the first receiving moment or the first receiving moment and the first transmission delay to the second base station by using another customized message; the second base station acquires the first time difference between the first base station and the second base station; and the second base station reports the first time difference to the central controller, or the second base station sends the acquired first time difference to the first base station again and the first base station reports the first time difference to the central controller.

Optionally, after collecting the multiple time differences, the first base station reports all the multiple time differences to the central controller by using a time difference report. In this case, the time difference report includes an identifier of the first base station, an identifier of the second base station, and the multiple time differences.

The first base station may perform time difference collection at any time according to the foregoing method, or may perform time difference collection in a specific time range.

It can be understood that, in a case in which UE is handed over from the second base station to the first base station, the central controller may acquire a time difference between the first base station and the second base station by using the second base station.

The central controller acquires at least one time difference between the first base station and the second base station, where the at least one time difference includes the first time difference.

S610: When the first base station is a reference base station, the second base station is a non-reference base station, and the central controller acquires, according to at least one time difference between the first base station and the second base station and reference time of the reference base station, a time adjustment value of the second base station relative to the first base station, that is, acquires a time adjustment value of the non-reference base station relative to the reference base station.

Specifically, the central controller processes the acquired at least one time difference between the first base station and the second base station and acquires at least one time difference of the second base station relative to the first base station. In a case in which there is only one time difference, because the first base station is the reference base station, the central controller may obtain the time adjustment value of the second base station relative to the reference base station, namely the time adjustment value of the non-reference base station relative to the reference base station, according to the time difference of the second base station relative to the first base station. In a case in which there are at least two time differences, the central controller performs averaging or filtering processing on the at least two time differences of the second base station relative to the first base station, which may specifically be: performing averaging processing on the at least one time difference, or performing averaging processing on two time differences with a minimum difference, or removing a largest value and a smallest value from the at least one time difference and performing averaging processing on remaining time differences, to obtain a time difference of the second base station relative to the first base station, namely an average time difference; and the central controller ultimately acquires, according to the reference time of the reference base station, the time adjustment value of the second base station relative to the reference base station, namely the time adjustment value of the non-reference base station relative to the reference base station.

S611: The central controller sends the time adjustment value to the second base station, that is, sends the time adjustment value is sent to the non-reference base station. Specifically, the central controller sends a time adjustment command message to the second base station, where the time adjustment command message carries the time adjustment value and the identifier of the second base station.

Optionally, the central controller performs determining before sending the time adjustment value to the non-reference base station. If the second base station, namely the non-reference base station, needs to perform time adjustment, the central controller sends the time adjustment value to the second base station.

S612: The second base station acquires the time adjustment value sent by the central controller and performs time adjustment according to the time adjustment value, to complete time synchronization.

Similarly, when the second base station is the reference base station, the first base station is the non-reference base station; and the central controller acquires, according to at least one time difference between the first base station and the second base station and reference time of the reference base station, a time adjustment value of the first base station relative to the second base station, that is, a time adjustment value of the non-reference base station relative to the reference base station can be acquired.

The central controller sends the time adjustment value to the first base station, that is, sends the time adjustment value to the non-reference base station.

The first base station receives the time adjustment value sent by the central controller and performs time adjustment according to the time adjustment value, to complete time synchronization.

In this embodiment, a time difference between base stations is acquired by means of signaling interworking in a non-contention based random access process of user equipment handed over between the base stations, and a time adjustment value of a non-reference base station is acquired according to reference time of a reference base station, so that the non-reference base station performs time adjustment according to the time adjustment value, thereby implementing time synchronization between the non-reference base station and the reference base station without using an expensive synchronization device, which reduces construction and maintenance costs and achieves technical effects of cost-effectiveness and convenience.

Embodiment 3

Referring to FIG. 1, a central controller 101 is independent of a base station, a base station 102a is a reference base station, and detailed descriptions of a process in which a base station 102b performs time synchronization with the reference base station by using an air interface are as follows:

When UE 103a is handed over from the base station 102a to the base station 102b, a process of acquiring a first time difference between the base stations is the same as that in Embodiment 2. The base station 102a is used as a first base station, the base station 102b is used as a second base station, and after acquiring the first time difference, the base station 102a reports the first time difference to the central controller 101.

When UE 103b is handed over from the base station 102b to the base station 102a, a process of acquiring a second time difference between the base stations is the same as that in Embodiment 2. The base station 102a is used as a second base station, the base station 102b is used as a first base station, and after acquiring the second time difference, the base station 102b reports the second time difference to the central controller 101. If multiple UEs are handed over from the base station 102a to the base station 102b, according to the foregoing method, the base station 102a may acquire multiple time differences and report the multiple time differences to the central controller 101. If multiple UEs are handed over from the base station 102b to the base station 102a, the base station 102b may also acquire multiple time differences and report the multiple time differences to the central controller 101.

The central controller 101 acquires at least one time difference between the base station 102a and the base station 102b from the base station 102a and/or the base station 102b. Processing performed by the central controller 101 on the acquired at least one time difference between the base station 102a and the base station 102b is consistent with that in Embodiment 2.

In this embodiment, the base station 102a is the reference base station, and the central controller 101 acquires, according to the at least one time difference between the base station 102a and the base station 102b and reference time of the reference base station, a time adjustment value of the base station 102b relative to the base station 102a, namely a time adjustment value of a non-reference base station relative to the reference base station.

The central controller 101 sends the time adjustment value to the base station 102b, that is, sends the time adjustment value to the non-reference base station. The base station 102b acquires the time adjustment value after receiving a time adjustment command message sent by the central controller 101, and performs time adjustment according to the time adjustment value, to complete time synchronization.

In this embodiment, a time difference between base stations is acquired by means of signaling interworking in a non-contention based random access process of user equipment handed over between the base stations, and a time adjustment value of a non-reference base station is acquired according to reference time of a reference base station, so that the non-reference base station performs time adjustment according to the time adjustment value, thereby implementing time synchronization between the non-reference base station and the reference base station without using an expensive synchronization device, which reduces construction and maintenance costs and achieves technical effects of cost-effectiveness and convenience.

**Embodiment 4**

Referring to FIG. 1, a central controller 101 is independent of a base station, and a base station 102a is used as a reference base station, no UE is directly handed over between a base station 102c and the base station 102a, at least one UE is handed over between the base station 102c and a base station 102b, and at least one UE is handed over between the base station 102b and the base station 102a. Detailed descriptions of a process in which the base station 102c performs time synchronization with the reference base station by using an air interface are as follows:

A process of acquiring a time difference between the base station 102c and the base station 102b is the same as the process described in Embodiment 2 or Embodiment 3.

To acquire a time difference between the base station 102c and the base station 102a, a time difference between the base station 102b and the base station 102a needs to be acquired.

A process of acquiring the time difference between the base station 102b and the base station 102a is the same as the process described in Embodiment 2 or Embodiment 3.

The central controller 101 acquires at least one time difference between the base station 102c and the base station 102b.

The central controller 101 processes the acquired at least one time difference between the base station 102c and the base station 102b.

The central controller 101 acquires at least one time difference between the base station 102b and the base station 102a.

The central controller 101 processes the acquired at least one time difference between the base station 102b and the base station 102a.

Because the base station 102a is the reference base station, the central controller 101 may acquire an average time difference of the base station 102c relative to the base station 102a according to an average time difference of the base station 102c relative to the base station 102b and an average time difference of the base station 102b relative to the base station 102a, that is, a time adjustment value of the base station 102c relative to the reference base station, namely a time adjustment value of a non-reference base station relative to the reference base station, can be acquired.

The central controller 101 sends the time adjustment value to the base station 102c, and the base station 102c acquires the time adjustment value and performs time adjustment, to complete time synchronization.

In this embodiment, the central controller 101 may also send the time adjustment value to the base station 102b. The base station 102b performs time adjustment after receiving the time adjustment value sent by the central controller 101, to complete time synchronization.

In this embodiment, a time difference between base stations is acquired by means of signaling interworking in a non-contention based random access process of user equipment handed over between the base stations, and a time adjustment value of a non-reference base station is acquired according to reference time of a reference base station, so that the non-reference base station performs time adjustment according to the time adjustment value, thereby implementing time synchronization between the non-reference base station and the reference base station without using an expensive synchronization device, which reduces construction and maintenance costs and achieves technical effects of cost-effectiveness and convenience.

**Embodiment 5**

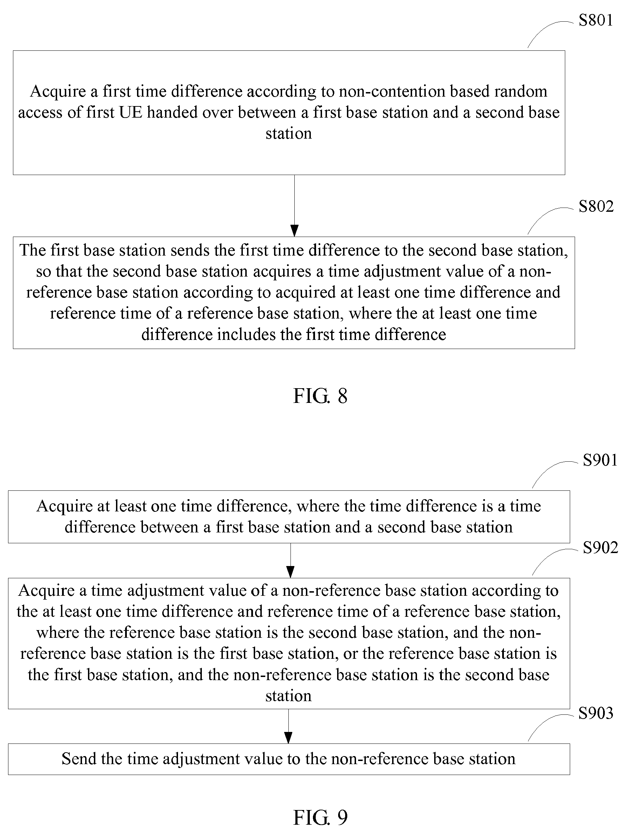

FIG. 8 illustrates another processing method of a first base station in air-interface-based synchronization according to this embodiment of the present invention.

S801: Acquire a first time difference according to non-contention based random access of first UE handed over between the first base station and a second base station.

The first base station calculates the first time difference between the first base station and the second base station according to a first receiving moment and a second receiving moment, where the first receiving moment is a moment at which the first base station detects a first random access preamble, the second receiving moment is a moment at which the second base station detects the first random access preamble, and the first random access preamble is a non-contention based random access preamble that is used to perform handover of the first UE between the first base station and the second base station and is a random access preamble that is allocated to the first UE by the second base station, so that the first UE initiates random access to the second base station according to the first random access preamble.

The first base station may also calculate the first time difference according to the first receiving moment, a first transmission delay, the second receiving moment, and a second transmission delay, where the first transmission delay is a transmission delay from the first UE to the first base station, and the second transmission delay is a transmission delay from the first UE to the second base station.

S802: The first base station sends the first time difference to the second base station, so that the second base station acquires a time adjustment value of a non-reference base station according to acquired at least one time difference and reference time of a reference base station, where the at least one time difference includes the first time difference.

When the reference base station is the first base station, the second base station is the non-reference base station; or when the reference base station is the second base station, the first base station is the non-reference base station. The second base station acquires the time adjustment value of the non-reference base station, and the non-reference base station performs time adjustment according to the time adjustment value.

FIG. 9 illustrates another processing method of a second base station in air-interface-based synchronization according to this embodiment of the present invention.

S901: Acquire at least one time difference, where the time difference is a time difference between a first base station and the second base station.

The at least one time difference includes a first time difference, where the first time difference is a time difference acquired according to non-contention based random access of first UE handed over between the first base station and the second base station.

S902: Acquire a time adjustment value of a non-reference base station according to the at least one time difference and reference time of a reference base station.

The second base station processes the at least one time difference to obtain an average time difference of the second base station relative to the first base station or an average time difference of the first base station relative to the second base station, and then determines the time adjustment value of the non-reference base station according to the reference time of the reference base station.

When the reference base station is the second base station, the non-reference base station is the first base station; or when the reference base station is the first base station, the non-reference base station is the second base station.

S903: Send the time adjustment value to the non-reference base station.

If the reference base station is the second base station, the second base station sends the time adjustment value to the first base station, so that the first base station performs time adjustment according to the time adjustment value; or if the reference base station is the first base station, the second base station performs time adjustment according to the time adjustment value.

In this embodiment, a time difference between base stations is acquired by means of signaling interworking in a non-contention based random access process of user equipment handed over between the base stations, and a time adjustment value of a non-reference base station is acquired according to reference time of a reference base station, so that the non-reference base station performs time adjustment according to the time adjustment value, thereby implementing time synchronization between the non-reference base station and the reference base station without using an expensive synchronization device, which reduces construction and maintenance costs and achieves technical effects of cost-effectiveness and convenience.

**Embodiment 6**

In this embodiment, a second base station has a function of a central controller in Embodiment 2. Detailed descriptions of an air-interface-based time synchronization method are as follows:

A time difference is acquired according to non-contention based random access of first UE handed over between a first base station and the second base station. A processing method of the first base station and a processing method of the second base station are similar to those in Embodiment 2, and a difference thereof lies in that, in this embodiment, the first base station sends a first time difference to the second base station.

The second base station may also acquire a time difference between base stations according to UE handed over from the second base station to the first base station.

The second base station acquires at least one time difference between the first base station and the second base station, where the at least one time difference includes a first time difference, and the first time difference is a time difference acquired according to non-contention based random access of the first UE handed over between the first base station and the second base station.

The second base station acquires a time adjustment value of a non-reference base station relative to a reference base station according to the at least one time difference between the first base station and the second base station and reference time of the reference base station. When the reference base station is the second base station, the non-reference base station is the first base station; or when the reference base station is the first base station, the non-reference base station is the second base station. A method by which the second base station processes the time difference and the time adjustment value is the same as a processing method of the central controller in Embodiment 2.

If the reference base station is the second base station, the second base station sends the time adjustment value to the first base station, so that the first base station performs time adjustment according to the time adjustment value; or if the reference base station is the first base station, the second base station performs time adjustment according to the time adjustment value.

Optionally, the second base station performs determining before sending the time adjustment value, and if the non-reference base station needs to perform time adjustment, the second base station sends the time adjustment value to the first base station.

The first base station performs time adjustment according to the time adjustment value after receiving the time adjustment value sent by the second base station, to complete time synchronization.

When the first base station is the reference base station, the second base station is the non-reference base station, and the second base station performs time adjustment according to the time adjustment value, to complete time synchronization.

In this embodiment, a time difference between base stations is acquired by means of signaling interworking in a non-contention based random access process of user equipment handed over between the base stations, and a time adjustment value of a non-reference base station is acquired according to reference time of a reference base station, so that the non-reference base station performs time adjustment according to the time adjustment value, thereby implementing time synchronization between the non-reference base station and the reference base station without using an expensive synchronization device, which reduces construction and maintenance costs and achieves technical effects of cost-effectiveness and convenience.

**Embodiment 7**

In this embodiment, a base station 102a has a function of the central controller 101 in Embodiment 2, and the base station 102a is a reference base station. Detailed descriptions of a process in which a base station 102c performs time synchronization with the reference base station by using an air interface are as follows:

Because the central controller 101 serves as a part of a function of the base station 102a, processing on a time difference report, processing on a time difference adjustment command, and the like are different from those in the embodiment in which the central controller 101 is independent of a base station.

The base station 102c acquires at least one time difference between the base station 102c and a base station 102b. A process is consistent with the process in Embodiment 2, and a difference thereof lies in that, in this embodiment, the base station 102c sends the at least one time difference between the base station 102c and the base station 102b to the base station 102a; similarly, the base station 102b may also collect the at least one time difference between the base station 102c and the base station 102b, and the base station 102b sends the at least one time difference between the base station 102c and the base station 102b to the base station 102a.

The base station 102a acquires the at least one time difference between the base station 102c and the base station 102b by using the base station 102c and/or the base station 102b.

The base station 102a acquires, according to the at least one time difference between the base station 102c and the base station 102b, a time adjustment value of the base station 102c relative to the base station 102b.

Specifically, the base station 102a processes the acquired at least one time difference between the base station 102c and the base station 102b and acquires at least one time difference of the base station 102c relative to the base station 102b; and the base station 102a performs averaging or filtering processing on the at least one time difference of the base station 102c relative to the base station 102b, to obtain an average time difference of the base station 102c relative to the base station 102b.

To acquire a time difference of the base station 102c relative to the base station 102a, a time difference of the base station 102b relative to the base station 102a also needs to be acquired, where the time difference of the base station 102b relative to the base station 102a is the same as that described in Embodiment 6. According to the foregoing method, the base station 102a may acquire an average time difference of the base station 102b relative to the base station 102a.

Because the base station 102a is the reference base station, the base station 102a may acquire an average time difference of the base station 102c relative to the base station 102a according to the average time difference of the base station 102c relative to the base station 102b and the average time difference of the base station 102b relative to the base station 102a, that is, may acquire a time adjustment value of the base station 102c relative to the reference base station.

The base station 102a sends the time adjustment value to the base station 102c.

The base station 102c acquires the time adjustment value and performs time adjustment, to complete time synchronization.

In this embodiment, the base station 102a may also send the time adjustment value to the base station 102b. The base station 102b acquires the time adjustment value and performs time adjustment, to complete time synchronization.

In this embodiment, a time difference between base stations is acquired by means of signaling interworking in a non-contention based random access process of user equipment handed over between the base stations, and a time adjustment value of a non-reference base station is acquired according to reference time of a reference base station, so that the non-reference base station performs time adjustment according to the time adjustment value, thereby implementing time synchronization between the non-reference base station and the reference base station without using an expensive synchronization device, which reduces construction and maintenance costs and achieves technical effects of cost-effectiveness and convenience.

**Embodiment 8**

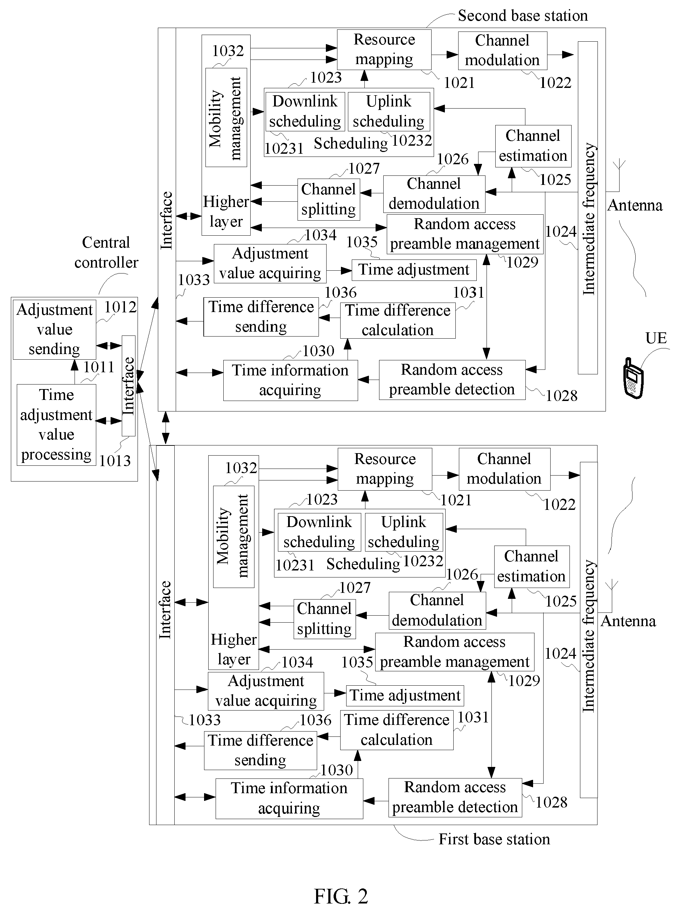

FIG. 2 is schematic structural diagram of an air-interface-based synchronization apparatus according to this embodiment of the present invention and includes schematic structural diagrams of a first base station, a second base station, and a central controller. An example in which the first base station is a reference base station and the second base station is a non-reference base station is described. The central controller acquires a time adjustment value of the second base station according to acquired at least one time difference and reference time of the first base station by means of non-contention random access of UE handed over between base stations.

The first base station includes a time difference calculation unit 1031 and a time difference sending unit 1036.

The time difference calculation unit 1031 is configured to acquire a first time difference according to non-contention based random access of first UE handed over between the first base station and the second base station, where the first base station is the reference base station, and the second base station is the non-reference base station.

The time difference sending unit 1036 is configured to send the first time difference acquired by the time difference calculation unit 1031 to the central controller, so that the central controller acquires the time adjustment value of the second base station according to the acquired at least one time difference and the reference time of the first base station, where the at least one time difference includes the first time difference.

Optionally, the time difference calculation unit 1031 is configured to calculate the first time difference according to a first receiving moment and a second receiving moment. To acquire the first receiving moment and the second receiving moment, the first base station further includes:

a random access preamble detection unit 1028, configured to detect a first random access preamble, where the first random access preamble is a non-contention based random access preamble that is used to perform handover of the first UE between the first base station and the second base station; and

a time information acquiring unit 1030, configured to: when the random access preamble detection unit detects the first random access preamble 1028, acquire the first receiving moment, where the first receiving moment is a moment at which the random access preamble detection unit detects the first random access preamble 1028; and the time information acquiring unit 1030 is further configured to acquire the second receiving moment, where the second receiving moment is a moment at which the second base station detects the first random access preamble.

Optionally, the first base station further includes a mobility management unit 1032, configured to send a handover request message to the second base station according to a neighboring cell measurement report of the first UE; and after the mobility management unit 1032 receives a handover request acknowledgement message sent by the second base station, the random access preamble detection unit 1028 enables detection of a random access preamble. After receiving the handover request acknowledgement message sent by the second base station, the mobility management unit 1032 is configured to send a handover command message to the first UE, so that the first UE initiates random access to the second base station according to the first random access preamble, where the handover request acknowledgement message and the handover command message carry an index of the first random access preamble, and the first random access preamble is a non-contention based random access preamble that is allocated to the first UE by the second base station.

Optionally, the time difference calculation unit 1031 is configured to calculate the first time difference according to the first receiving moment, a first transmission delay, the second receiving moment, and a second transmission delay. The first transmission delay is a transmission from the first UE to the first base station, and the second transmission delay is a transmission from the first UE to the second base station.

The first base station further includes a resource mapping unit 1021, configured to: after the mobility management unit 1032 sends the handover request message to the second base station, send a PDCCH Order to the first UE, where the PDCCH Order carries an index of the second random access preamble, so that the first UE initiates active random access to the first base station according to the second random access preamble after receiving the PDCCH Order; and a random access preamble management unit 1029, configured to allocate the second random access preamble to the first UE.

The random access preamble detection unit 1028 is further configured to detect the second random access preamble, and when the second random access preamble is detected, the time information acquiring unit 1030 acquires the first transmission delay from the UE to the first base station.

Optionally, the time information acquiring unit 1030 is configured to acquire the second transmission delay sent by the second base station.

Optionally, the mobility management unit 1032 is further configured to receive a user resource release message sent by the second base station, where the user resource release message carries the second receiving moment, or the second receiving moment and the second transmission delay. After the mobility management unit receives the user resource release message, the time information acquiring unit acquires the second receiving moment, or the second receiving moment and the second transmission delay, so that the time difference calculation unit calculates the first time difference.

Optionally, First time difference = (Second receiving moment – First receiving moment); or, First time difference = (First receiving moment – Second receiving moment).

Optionally, First time difference = (Second receiving moment – First receiving moment) – (Second transmission delay – First transmission delay); or, First time difference = (First receiving moment – Second receiving moment) – (First transmission delay – Second transmission delay).

Optionally, First time difference = (Second receiving moment – First receiving moment) + (Second transmission delay – First transmission delay); or, First time difference = (First receiving moment – Second receiving moment) + (First transmission delay – Second transmission delay).

The second base station includes an adjustment value acquiring unit 1034 and a time adjustment unit 1035.

The adjustment value acquiring unit 1034 is configured to receive a time adjustment value sent by the central controller, where the time adjustment value is obtained by the central controller according to at least one time difference and reference time of the first base station, and a first time difference is a time difference acquired according to non-contention based random access of first UE handed over between the first base station and the second base station.

The time adjustment unit 1035 is configured to perform time adjustment according to the time adjustment value acquired by the adjustment value acquiring unit 1034, to complete time synchronization with the first base station, that is, to keep time synchronization with a reference base station.

Because the first UE is handed over from the first base station to the second base station, to acquire receiving moments by detecting the non-contention based random access preamble of the first UE by the first base station and the second base station and to cooperate with the first base station in calculating the first time difference, the second base station further includes: a random access preamble management unit 1029, a mobility management unit 1032, a random access preamble detection unit 1028, and a time information acquiring unit 1030.

The random access preamble management unit 1029 is configured to allocate a first random access preamble to the first UE, where the first random access preamble is a non-contention based random access preamble that is used to perform handover of the first UE between the first base station and the second base station.

The mobility management unit 1032 is configured to: after receiving a handover request message sent by the first base station, send a handover request acknowledgement message to the first base station, so that the first base station enables detection of a random access preamble, where the handover request acknowledgement message carries an index of the first random access preamble that is allocated to the first UE by the random access preamble management unit.

The random access preamble detection unit 1028 is configured to detect the first random access preamble.

The time information acquiring unit 1030 is configured to acquire a second receiving moment by using the first random access preamble detected by the random access preamble detection unit 1028; and optionally, may also acquire a second receiving moment and a second transmission delay, where the second transmission delay is a transmission delay from the first UE to the second base station.

The mobility management unit 1032 is further configured to send the second receiving moment acquired by the time information acquiring unit 1030 to the first base station, so that the first base station acquires a first time difference between the first base station and the second base station; and optionally, send the second receiving moment and the second transmission delay that are acquired by the time information acquiring unit 1030 to the first base station. Preferably, the mobility management unit 1032 sends a user resource release message to the first base station after the first UE is handed over to the second base station, where the user resource release message carries the second receiving moment or the user resource release message carries the second receiving moment and the second transmission delay.

The time difference sending unit 1036 of the first base station sends the first time difference obtained by the time difference calculation unit 1031 to the central controller.

It can be understood that, the first base station and the second base station are interchangeable in calculating a time difference by detecting a random access preamble of handover UE. In this embodiment, the second base station may include the foregoing units of the first base station and execute corresponding functions, and the first base station may also include the foregoing units of the second base station and execute corresponding functions, that is, for UE handed over from the second base station to the first base station, the time difference sending unit 1036 of the second base station may send the time difference obtained by the time difference calculation unit 1031 to the central controller.

A central controller apparatus includes a time adjustment value processing unit 1011 and an adjustment value sending unit 1012.

The time adjustment value processing unit 1011 is configured to: acquire at least one time difference, and acquire a time adjustment value of the second base station according to the at least one time difference and reference time of the first base station, where the time difference is a time difference between the first base station and the second base station, and the at least one time difference includes a first time difference, where the first time difference is a time difference acquired according to non-contention based random access of first UE handed over between the first base station and the second base station. In a case in which there are at least two time differences, the time adjustment value processing unit 1011 may perform averaging processing, or perform averaging processing on two time differences with a minimum difference, or remove a largest value and a smallest value of the multiple time differences and perform averaging processing on remaining time differences; and acquire a time adjustment value by comparing the time difference obtained after the averaging processing with the reference time.

The adjustment value sending unit 1012 is configured to send the time adjustment value acquired by the time adjustment value processing unit 1011 to the second base station; and optionally, determine, according to the time adjustment value, whether the second base station needs to perform time adjustment, and if the second base station needs to perform time adjustment, send the time adjustment value to the second base station.

The time adjustment unit 1035 of the second base station performs time adjustment according to the time adjustment value acquired by the adjustment value acquiring unit 1034, to complete time synchronization with the first base station.

Optionally, the central controller further includes an interface unit 1012, configured to implement information exchange between the central controller and a base station.

Optionally, the first base station and the second base station further include: a channel modulation unit 1022, a scheduling unit 1023, an intermediate frequency unit 1024, a channel estimation unit 1025, a channel demodulation unit 1026, a channel splitting unit 1027, and an interface unit 1033. The scheduling unit 1023 includes a downlink scheduling unit 10231 and an uplink scheduling unit 10232. The downlink scheduling unit 10231 is configured to perform downlink resource scheduling according to channel information fed back by UE and user related information from a higher layer. The uplink scheduling unit 10232 is configured to perform uplink resource scheduling according to an uplink channel estimation result from the channel estimation unit 1025 and a resource request from the UE.

The intermediate frequency unit 1024 is configured to: perform up-conversion on an OFDM signal obtained after channel modulation and send the OFDM signal to the UE through a wireless channel by using an antenna. The intermediate frequency unit 1024 receives an uplink signal of the UE by using the antenna, down-converts the uplink signal to a baseband signal, and transfers the baseband signal to the channel estimation unit 1025, the channel demodulation unit 1026, and the random access preamble detection unit 1028.

The channel estimation unit 1025 is configured to: estimate, based onan uplink pilot channel, a feature of a wireless transmission path and send a channel estimation result to the channel demodulation unit 1026. To accurately perform uplink or downlink resource scheduling, the channel estimation result is further sent to the scheduling unit 1023.

The channel demodulation unit 1026 is configured to demodulate, according to the channel estimation result from the channel estimation unit 1025, a received signal sent by the intermediate frequency unit 1024. The channel splitting unit 1027 splits a signal processed by the channel demodulation unit 1026 into user data and control data, and transfers downlink CQI information in the control data obtained after the splitting to the scheduling unit 1023 and transfers other control data and the user data to the higher layer.

The interface unit 1033 includes: an interface X2 between base stations, configured to perform information exchange between base stations; and an interface S1 between a base station and a core network, configured to perform information exchange between the base station and the core network. When the central controller is located outside a base station, the interface unit 1033 further includes an interface between a base station and the central controller and is configured to perform information exchange between the base station and the central controller.

The resource mapping unit 1021 is configured to map control data and user data, input from a higher layer, to a downlink control channel, a downlink synchronization channel, and a downlink data sharing channel according to a scheduling instruction of the scheduling unit 1023. The channel modulation unit 1022 performs processing such as data modulation, serial/parallel conversion, IFFT transformation, and CP insertion and generates an OFDM signal.

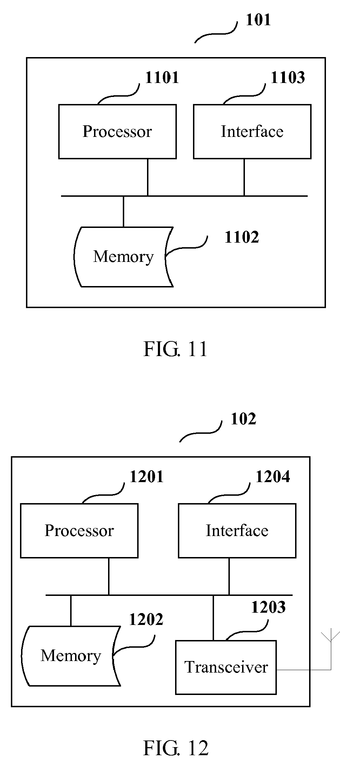

FIG. 11 is a schematic diagram of a central controller apparatus in air-interface-based synchronization according to this embodiment of the present invention. The central controller includes a processor 1101, a memory 1102, and an interface 1103, where the processor 1101, the memory 1102, and the interface 1103 are connected by using a bus.

The interface 1103 is configured to perform information exchange with a base station 102.

The memory 1102 is configured to store program code, and the processor 1101 invokes the program code stored in the memory, to execute the method of the central controller in Embodiment 2.

FIG. 12 is a schematic diagram of an apparatus of a first base station in air-interface-based synchronization according to this embodiment of the present invention. The apparatus includes a processor 1201, a memory 1202, a transceiver 1203, and an interface 1204, where the processor 1201, the memory 1202, the transceiver 1203, and the interface 1204 are connected by using a bus.

The interface 1204 is configured to perform information exchange between base stations, information exchange between a base station and a core network, or information exchange with a central controller 101.

The transceiver 1203 is configured to perform information exchange with user equipment.

The memory 1202 is configured to store program code, and the processor 1201 invokes the program code stored in the memory 1202, to execute the method of the first base station in Embodiment 2.

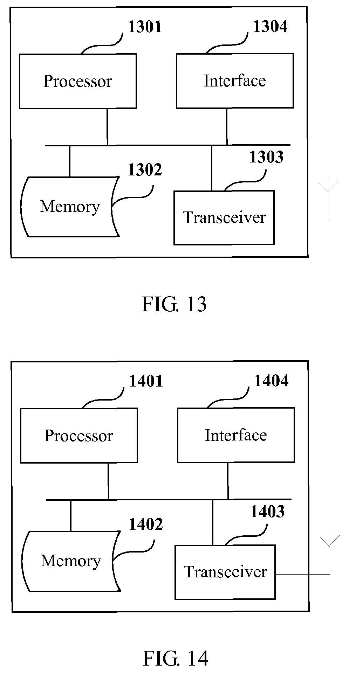

FIG. 13 is a schematic diagram of an apparatus of a second base station in air-interface-based synchronization according to this embodiment of the present invention. The apparatus includes a processor 1301, a memory 1302, a transceiver 1303, and an interface 1304, where the processor 1301, the memory 1302, the transceiver 1303, and the interface 1304 are connected by using a bus.

The interface 1304 is configured to perform information exchange between base stations, information exchange between a base station and a core network, or information exchange with a central controller 101.

The transceiver 1303 is configured to perform information exchange with user equipment.

The memory 1302 is configured to store program code, and the processor 1301 invokes the program code stored in the memory 1302, to execute the method of the second base station in Embodiment 2.

In this embodiment, a time difference between base stations is acquired by means of signaling interworking in a non-contention based random access process of user equipment handed over between the base stations, and a time adjustment value of a non-reference base station is acquired according to reference time of a reference base station, so that the non-reference base station performs time adjustment according to the time adjustment value, thereby implementing time synchronization between the non-reference base station and the reference base station without using an expensive synchronization device, which reduces construction and maintenance costs and achieves technical effects of cost-effectiveness and convenience.

**Embodiment 9**

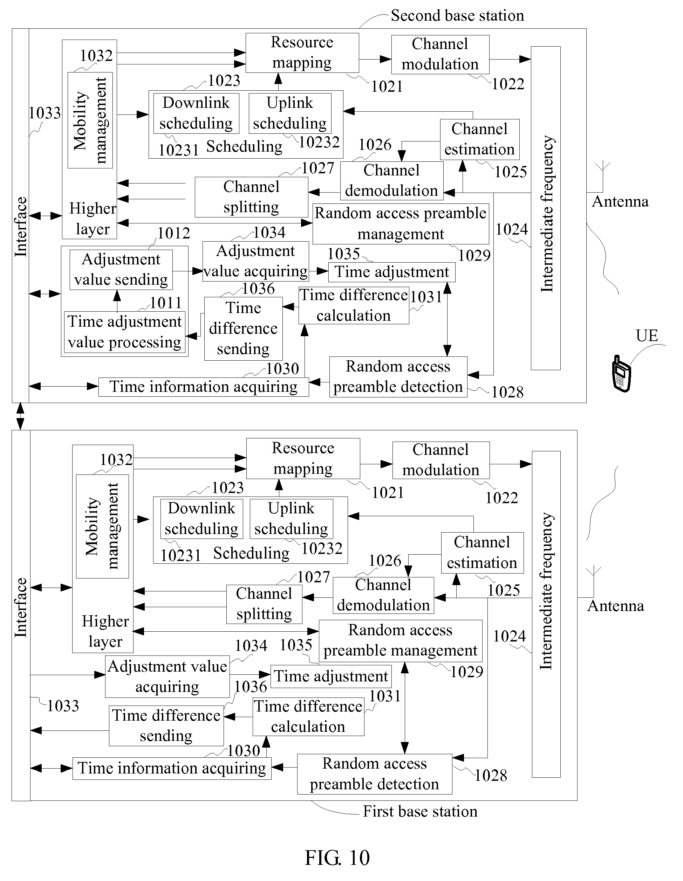

FIG. 10 is another schematic structural diagram of an air-interface-based synchronization apparatus according to this embodiment of the present invention. A second base station includes a function of the central controller in Embodiment 8. When a reference base station is the second base station, a non-reference base station is a first base station; or when a reference base station is a first base station, a non-reference base station is the second base station. The first base station is basically consistent with the first base station in Embodiment 8, and a difference thereof lies in that, in this embodiment, a time difference sending unit 1036 of the first base station sends a first time difference obtained by a time difference calculation unit 1031 to the second base station, so that the second base station acquires a time adjustment value of the non-reference base station according to acquired at least one time difference and reference time of the reference base station.

In this embodiment, the first base station further includes an adjustment value acquiring unit 1034 and a time adjustment unit 1035.

The adjustment value acquiring unit 1034 is configured to: when the reference base station is the second base station, acquire the time adjustment value sent by the second base station.

The time adjustment unit 1035 is configured to perform time adjustment according to the time adjustment value acquired by the adjustment value acquiring unit 1034.

FIG. 14 is a schematic structural diagram of another apparatus of a first base station in air-interface-based synchronization according to this embodiment of the present invention. The apparatus includes a processor 1401, a memory 1402, a transceiver 1403, and an interface 1404, where the processor 1401, the memory 1402, the transceiver 1403, and the interface 1404 are connected by using a bus.

The interface 1404 is configured to perform information exchange between base stations or information exchange between a base station and a core network.

The transceiver 1403 is configured to perform information exchange with user equipment.

The memory 1402 is configured to store program code, and the processor 1401 invokes the program code stored in the memory 1402, to execute the method of the first base station in Embodiment 6.

A second base station includes the central controller in Embodiment 8; therefore, the second base station includes a time adjustment value processing unit 1011 and an adjustment value sending unit 1012.

The time adjustment value processing unit 1011 is configured to: acquire at least one time difference, and acquire a time adjustment value of a non-reference base station according to the at least one time difference and reference time of a reference base station, where the at least one time difference includes a first time difference, and the first time difference is a time difference acquired according to non-contention based random access of first UE handed over between the first base station and the second base station.

The adjustment value sending unit 1012 is configured to send the time adjustment value acquired by the time adjustment value processing unit 1011 to the non-reference base station, where when the reference base station is the second base station, the time adjustment value is sent to the first base station; or when the reference base station is the first base station, the time adjustment value is sent to the second base station.

To cooperate with the first base station in acquiring a time difference between the base stations according to handover of first UE, the second base station further includes: a random access preamble management unit 1029, a mobility management unit 1032, a random access preamble detection unit 1028, and a time information acquiring unit 1030. These units are consistent with corresponding units of the second base station in Embodiment 9.

It can be understood that, for calculating a time difference according to handover, in this embodiment, the second base station may include the foregoing units of the first base station and implement corresponding functions, and the first base station may also include another unit, except the time adjustment value processing unit 1011 and the adjustment value sending unit 1012, of the second base station and implement corresponding functions, that is, for UE handed over from the second base station to the first base station, a time difference sending unit 1036 of the second base station sends a time difference obtained by a time difference calculating unit 1031 to the time adjustment value processing unit 1011.

The second base station further includes an adjustment value acquiring unit 1034 and a time adjustment unit 1035.

The adjustment value acquiring unit 1034 is configured to: when the reference base station is the first base station, acquire the time adjustment value sent by the second base station, that is, acquire the time adjustment value sent by the adjustment value sending unit 1012.

The time adjustment unit 1035 is configured to perform time adjustment according to the time adjustment value acquired by the adjustment value acquiring unit 1034.

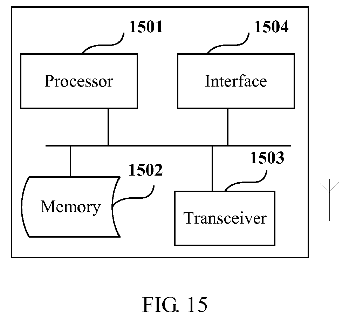

FIG. 15 is a schematic diagram of another apparatus of a second base station in air-interface-based synchronization according to this embodiment of the present invention. The apparatus includes a processor 1501, a memory 1502, a transceiver 1503, and an interface 1504, where the processor 1501, the memory 1502, the transceiver 1503, and the interface 1504 are connected by using a bus.

The interface 1504 is configured to perform information exchange between base stations or information exchange between a base station and a core network.

The transceiver 1503 is configured to perform information exchange with user equipment.

The memory 1502 is configured to store program code, and the processor 1501 invokes the program code stored in the memory 1502, to execute the method of the second base station in Embodiment 6.

In this embodiment, a time difference between base stations is acquired by means of signaling interworking in a non-contention based random access process of user equipment handed over between the base stations, and a time adjustment value of a non-reference base station is acquired according to reference time of a reference base station, so that the non-reference base station performs time adjustment according to the time adjustment value, thereby implementing time synchronization between the non-reference base station and the reference base station without using an expensive synchronization device, which reduces construction and maintenance costs and achieves technical effects of cost-effectiveness and convenience.

It may be clearly understood by persons skilled in the art that, for the purpose of convenient and brief description, division of the foregoing function modules is taken as an example for illustration. In actual application, the foregoing functions can be allocated to different function modules and implemented according to a requirement, that is, an inner structure of an apparatus is divided into different function modules to implement all or some of the functions described above. For a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present application essentially, or the part contributing to the prior art, or all or a part of the technical solutions may be implemented in the form of a software product. The software product is stored in a storage medium and includes several instructions for instructing a computer device (which may be a personal computer, a server, or a network device) or a processor to perform all or a part of the steps of the methods described in the embodiments of the present application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of the present application, but not for limiting the present application. Although the present application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present application.

**Claims**

1. A central controller apparatus, comprising:

   a time adjustment value processing unit, configured to: acquire at least one time difference, and acquire a time adjustment value of a second base station according to the at least one time difference and reference time of a first base station, wherein the time difference is a time difference between the first base station and the second base station, and the at least one time difference comprises a first time difference, wherein the first time difference is a time difference acquired according to non-contention based random access of first user equipment UE handed over between the first base station and the second base station, the first base station is a reference base station, and the second base station is a non-reference base station; and
   an adjustment value sending unit, configured to send the time adjustment value acquired by the time adjustment value processing unit to the second base station.

2. The central controller apparatus according to claim 1, wherein that the time adjustment value processing unit is configured to acquire a time adjustment value of a second base station according to the at least one time difference and reference time of a first base station comprises:

   if the time adjustment value processing unit acquires at least two time differences, performing averaging processing on the at least two time differences, or performing averaging processing on two time differences with a minimum difference, or removing a largest value and a smallest value of the multiple time differences and performing averaging processing on remaining time differences; and acquiring the time adjustment value of the second base station according to the time difference obtained after the averaging processing and the reference time of the first base station.

3. The central controller apparatus according to claim 1 or 2, wherein that the adjustment value sending unit is configured to send the time adjustment value to the second base station comprises:

   determining, according to the time adjustment value, whether the second base station needs to perform time adjustment, and if the second base station needs to perform time adjustment, sending the time adjustment value to the second base station.

4. A base station, which serves as a first base station, comprising:

   a time difference calculation unit, configured to acquire a first time difference, wherein the first time difference is a time difference acquired according to non-contention based random access of first user equipment UE handed over between the first base station and a second base station; and

a time difference sending unit, configured to send the first time difference acquired by the time difference calculation unit to a central controller, so that the central controller acquires a time adjustment value of the second base station according to acquired at least one time difference and reference time of the first base station, wherein the at least one time difference comprises the first time difference, the first base station is a reference base station, and the second base station is a non-reference base station.

5. The base station according to claim 4, further comprising:

a random access preamble detection unit, configured to detect a first random access preamble, wherein the first random access preamble is a non-contention based random access preamble that is used to perform handover of the first UE between the first base station and the second base station; and

a time information acquiring unit, configured to: when the random access preamble detection unit detects the first random access preamble, acquire a first receiving moment, wherein the first receiving moment is a moment at which the random access preamble detection unit detects the first random access preamble, wherein

the time information acquiring unit is further configured to acquire a second receiving moment, wherein the second receiving moment is a moment at which the second base station detects the first random access preamble; and

that the time difference calculation unit is configured to acquire the first time difference according to non-contention based random access of first user equipment UE handed over between the first base station and the second base station comprises:

calculating the first time difference according to the first receiving moment and the second receiving moment that are acquired by the time information acquiring unit.

6. The base station according to claim 4 or 5, further comprising:

a mobility management unit, configured to: send a handover request message to the second base station according to a neighboring cell measurement report of the first UE, and send a handover command message to the first UE after receiving a handover request acknowledgement message sent by the second base station, so that the first UE initiates random access to the second base station according to the first random access preamble, wherein the handover request acknowledgement message and the handover command message carry an index of the first random access preamble, and the first random access preamble is a non-contention based random access preamble that is allocated to the first UE by the second base station, wherein

the random access preamble detection unit is further configured to: after the mobility management unit receives the handover request acknowledgement message sent by the second base station, enable detection of a random access preamble.

7. The base station according to claim 6, further comprising:

a random access preamble management unit, configured to allocate a second random access preamble to the first UE; and

a resource mapping unit, configured to: after the mobility management unit sends the handover request message to the second base station, send a physical downlink control channel order PDCCH Order to the first UE, wherein the PDCCH Order carries an index of the second random access preamble, so that the first UE initiates active random access to the first base station according to the second random access preamble after receiving the PDCCH Order, wherein

the random access preamble detection unit is further configured to detect the second random access preamble;

the time information acquiring unit is further configured to acquire a first transmission delay from the first UE to the first base station by using the second random access preamble detected by the random access preamble detection unit;

that the time information acquiring unit is further configured to acquire the second receiving moment comprises:

acquiring the second receiving moment and a second transmission delay, wherein the second transmission delay is a transmission delay from the first UE to the second base station; and

that the time difference calculation unit is configured to acquire the first time difference comprises:

calculating the first time difference according to the first receiving moment, the first transmission delay, the second receiving moment, and the second transmission delay.

8. The base station according to claim 6 or 7, wherein the mobility management unit is further configured to:

receive a user resource release message sent by the second base station, wherein the user resource release message carries the second receiving moment, or the second receiving moment and the second transmission delay, so that the time information acquiring unit acquires the second receiving moment, or the second receiving moment and the second transmission delay.

9. The base station according to claim 5, wherein that the time difference calculation unit is configured to calculate the first time difference according to the first receiving moment and the second receiving moment that are acquired by the time information acquiring unit comprises:

calculating the first time difference according to First time difference = (Second receiving moment – First receiving moment);

or

calculating the first time difference according to First time difference = (First receiving moment – Second receiving moment).

10. The base station according to claim 7, wherein that the time difference calculation unit is configured to calculate the first time difference according to the first receiving moment, the first transmission delay, the second receiving moment, and the second transmission delay comprises:

calculating the first time difference according to First time difference = (Second receiving moment – First receiving moment) – (Second transmission delay – First transmission delay);

or

calculating the first time difference according to First time difference = (First receiving moment – Second receiving moment) – (First transmission delay – Second transmission delay).

11. The base station according to claim 7, wherein that the time difference calculation unit is configured to calculate the first time difference according to the first receiving moment, the first transmission delay, the second receiving moment, and the second transmission delay comprises:

calculating the first time difference according to First time difference = (Second receiving moment − First receiving moment) + (Second transmission delay − First transmission delay);

or

calculating the first time difference according to First time difference = (First receiving moment − Second receiving moment) + (First transmission delay − Second transmission delay).

12. A base station, which serves as a second base station, comprising
an adjustment value acquiring unit, configured to receive a time adjustment value sent by a central controller, wherein the time adjustment value is a time adjustment value of the second base station that is acquired by the central controller according to at least one time difference and reference time of a first base station, and the at least one time difference comprises a first time difference, wherein the first time difference is a time difference acquired according to non-contention based random access of first user equipment UE handed over between the first base station and the second base station, the first base station is a reference base station, and the second base station is a non-reference base station; and
a time adjustment unit, configured to perform time adjustment according to the time adjustment value acquired by the adjustment value acquiring unit.

13. The base station according to claim 12, further comprising:

a random access preamble management unit, configured to allocate a first random access preamble to the first UE, wherein the first random access preamble is a non-contention based random access preamble that is used to perform handover of the first UE between the first base station and the second base station;
a mobility management unit, configured to: after receiving a handover request message sent by the first base station, send a handover request acknowledgement message to the first base station, so that the first base station enables detection of a random access preamble, wherein the handover request acknowledgement message carries an index of the first random access preamble that is allocated to the first UE by the random access preamble management unit;
a random access preamble detection unit, configured to detect the first random access preamble; and
a time information acquiring unit, configured to acquire a second receiving moment by using the first random access preamble detected by the random access preamble detection unit, wherein
the mobility management unit is further configured to send the second receiving moment acquired by the time information acquiring unit to the first base station, so that the first base station acquires the first time difference between the first base station and the second base station.

14. The base station according to claim 13, wherein that the time information acquiring unit is configured to acquire a second receiving moment by using the first random access preamble detected by the random access preamble detection unit comprises:

acquiring the second receiving moment and a second transmission delay by using the first random access preamble detected by the random access preamble detection unit, wherein the second transmission delay is a transmission delay from the first UE to the second base station; and
that the mobility management unit is configured to send the second receiving moment acquired by the time information acquiring unit to the first base station comprises:

sending the second receiving moment and the second transmission delay that are acquired by the time information acquiring unit to the first base station.

**15.** The base station according to claim 13, wherein that the mobility management unit is configured to send the second receiving moment to the first base station comprises:

sending a user resource release message to the first base station after the first UE is handed over to the second base station, wherein the user resource release message carries the second receiving moment.

**16.** The base station according to claim 14, wherein that the mobility management unit is configured to send the second receiving moment and the second transmission delay to the first base station comprises:

sending a user resource release message to the first base station after the first UE is handed over to the second base station, wherein the user resource release message carries the second receiving moment and the second transmission delay.

**17.** An air-interface-based synchronization method, comprising:

acquiring, by a central controller, at least one time difference, wherein the time difference is a time difference between the first base station and the second base station, and the at least one time difference comprises a first time difference, wherein the first time difference is a time difference acquired by the first base station according to non-contention based random access of first user equipment UE handed over between the first base station and the second base station, the first base station is a reference base station, and the second base station is a non-reference base station;
acquiring, by the central controller, a time adjustment value of the second base station according to the at least one time difference and reference time of the first base station; and
sending, by the central controller, the time adjustment value to the second base station.

**18.** The air-interface-based synchronization method according to claim 17, wherein the acquiring, by the central controller, a time adjustment value of the second base station according to the at least one time difference and reference time of the first base station comprises:

if the central controller acquires at least two time differences, performing averaging processing on the at least two time differences, or performing averaging processing on two time differences with a minimum difference, or removing a largest value and a smallest value of the multiple time differences and performing averaging processing on remaining time differences; and acquiring the time adjustment value of the second base station according to the time difference obtained after the averaging processing and the reference time of the first base station.

**19.** The air-interface-based synchronization method according to claim 17 or 18, wherein the sending, by the central controller, the time adjustment value to the non-reference base station comprises:

determining, by the central controller according to the time adjustment value, whether the second base station needs to perform time adjustment, and if the second base station needs to perform time adjustment, sending the time adjustment value to the second base station.

**20.** An air-interface-based synchronization method, comprising:

acquiring, by a first base station, a first time difference, wherein the first time difference is a time difference acquired according to non-contention based random access of first user equipment UE handed over between the first base station and a second base station, the first base station is a reference base station, and the second base station is a non-reference base station; and
sending, by the first base station, the first time difference to a central controller, so that the central controller acquires a time adjustment value of the second base station according to acquired at least one time difference and reference time of the first base station, wherein the at least one time difference comprises the first time difference.

**21.** The air-interface-based synchronization method according to claim 20, wherein the acquiring a first time difference comprises:

calculating, by the first base station, the first time difference between the first base station and the second base station according to a first receiving moment and a second receiving moment, wherein the first receiving moment is a moment at which the first base station detects the first random access preamble, and the second receiving moment is a moment at which the second base station detects the first random access preamble; and receiving, by the first base station, the second receiving moment sent by the second base station, wherein the first random access preamble is a non-contention based random access preamble that is used to perform handover of the first UE between the first base station and the second base station.

22. The air-interface-based synchronization method according to claim 20, wherein the acquiring a first time difference comprises:

   calculating, by the first base station, the first time difference according to the first receiving moment, a first transmission delay, the second receiving moment, and a second transmission delay, wherein the first receiving moment is a moment at which the first base station receives the first random access preamble, the first transmission delay is a transmission delay from the first UE to the first base station, the second receiving moment is a moment at which the second base station receives the first random access preamble, and the second transmission delay is a transmission delay from the first UE to the second base station.

23. The air-interface-based synchronization method according to any one of claims 20 to 22, wherein the acquiring a first time difference further comprises:

   sending, by the first base station, a handover request message to the second base station according to a neighboring cell measurement report of the first UE; and after receiving a handover request acknowledgement message sent by the second base station, enabling, by the first base station, detection of a random access preamble and sending a handover command message to the first UE, so that the first UE initiates random access to the second base station according to the first random access preamble, wherein the handover request acknowledgement message and the handover command message carry an index of the first random access preamble that is allocated to the first UE by the second base station.

24. The air-interface-based synchronization method according to claim 22 or 23, wherein the calculating, by the first base station, the first time difference according to the first receiving moment, a first transmission delay, the second receiving moment, and a second transmission delay further comprises:

   after sending the handover request message to the second base station, triggering, by the first base station, the first UE to initiate random access and acquiring the first transmission delay from the first UE to the first base station.

25. The air-interface-based synchronization method according to claim 24, wherein the triggering the first UE to initiate random access and acquiring the first transmission delay from the first UE to the first base station comprises:

   sending, by the first base station, a physical downlink control channel order PDCCH Order to the first UE, wherein the PDCCH Order carries an index of a second random access preamble that is allocated to the first UE by the first base station, so that the first UE initiates active random access to the first base station according to the second random access preamble after receiving the PDCCH Order; and when the first base station detects the second random access preamble, acquiring the first transmission delay from the first UE to the first base station.

26. The air-interface-based synchronization method according to claim 21, wherein the calculating, by the first base station, the first time difference between the first base station and the second base station according to a first receiving moment and a second receiving moment further comprises:

   receiving, by the first base station, a user resource release message sent by the second base station, wherein the user resource release message carries the second receiving moment.

27. The air-interface-based synchronization method according to claim 22, wherein the calculating, by the first base station, the first time difference according to the first receiving moment, a first transmission delay, the second receiving moment, and a second transmission delay further comprises:

   receiving, by the first base station, a user resource release message sent by the second base station, wherein the user resource release message carries the second receiving moment and the second transmission delay.

28. The air-interface-based synchronization method according to claim 20 or 21, wherein the calculating, by the first base station, the first time difference between the first base station and the second base station according to a first receiving moment and a second receiving moment comprises:

   calculating the first time difference according to First time difference = (Second receiving moment - First receiving moment); or
   calculating the first time difference according to First time difference = (First receiving moment - Second receiving moment).

29. The air-interface-based synchronization method according to any one of claims 22 to 25, wherein the calculating, by the first base station, the first time difference according to the first receiving moment, the first transmission delay, the second receiving moment, and the second transmission delay comprises:

   calculating the first time difference according to First time difference = (Second receiving moment – First receiving moment) – (Second transmission delay – First transmission delay);

   or

   calculating the first time difference according to First time difference = (First receiving moment – Second receiving moment) – (First transmission delay – Second transmission delay).

30. The air-interface-based synchronization method according to any one of claims 22 to 25, comprising:

   calculating the first time difference according to First time difference = (Second receiving moment – First receiving moment) + (Second transmission delay – First transmission delay);

   or

   calculating the first time difference according to First time difference = (First receiving moment – Second receiving moment) + (First transmission delay – Second transmission delay).

31. An air-interface-based synchronization method, comprising:

   acquiring, by a second base station, a time adjustment value sent by a central controller, wherein the time adjustment value is obtained by the central controller according to at least one time difference and reference time of a first base station, and the at least one time difference comprises a first time difference, wherein the first time difference is a time difference acquired according to non-contention based random access of first user equipment UE handed over between the first base station and the second base station, the first base station is a reference base station, and the second base station is a non-reference base station; and
performing, by the second base station, time adjustment according to the time adjustment value.

32. The air-interface-based synchronization method according to claim 31, further comprising:

after receiving a handover request message sent by the first base station, sending, by the second base station, a handover request acknowledgement message to the first base station, so that the first base station enables detection of a random access preamble, wherein the handover request acknowledgement message carries an index of a first random access preamble that is allocated to the first user equipment UE by the second base station, and the first random access preamble is a non-contention based random access preamble that is used to perform handover of the first UE between the first base station and the second base station; and
acquiring, by the second base station by detecting the first random access preamble, a second receiving moment and sending the second receiving moment to the first base station, so that the first base station acquires the first time difference between the first base station and the second base station, wherein the second receiving moment is a moment at which the second base station detects the first random access preamble.

33. The air-interface-based synchronization method according to claim 32, wherein the acquiring, by the second base station by detecting the first random access preamble, a second receiving moment and sending the second receiving moment to the first base station comprises:

acquiring, by the second base station by detecting the first random access preamble, the second receiving moment and a second transmission delay and sending the second receiving moment and the second transmission delay to the first base station, wherein the second transmission delay is a transmission delay from the first UE to the second base station.

34. The air-interface-based synchronization method according to claim 32, wherein the sending the second receiving moment to the first base station comprises:

sending, by the second base station, a user resource release message to the first base station after the first UE is handed over to the second base station, wherein the user resource release message carries the second receiving moment.

35. The air-interface-based synchronization method according to claim 33, wherein the sending the second receiving moment and the second transmission delay to the first base station comprises:

sending, by the second base station, a user resource release message to the first base station after the first UE is handed over to the second base station, wherein the user resource release message carries the second receiving moment and the second transmission delay.

36. A base station, which serves as a first base station, comprising:

a time difference calculation unit, configured to acquire a first time difference, wherein the first time difference is a time difference acquired according to non-contention based random access of first user equipment UE handed over between the first base station and the second base station; and
a time difference sending unit, configured to send the first time difference acquired by the time difference calculation unit to the second base station, so that the second base station acquires a time adjustment value of a non-reference base station according to acquired at least one time difference and reference time of a reference base station, wherein the at least one time difference comprises the first time difference, and the reference base station is the first base station and the non-reference base station is the second base station, or the reference base station is the second base station and the non-reference base station is the first base station.

37. The base station according to claim 36, further comprising:

a random access preamble detection unit, configured to detect a first random access preamble, wherein the first random access preamble is a non-contention based random access preamble that is used to perform handover of the first UE between the first base station and the second base station; and
a time information acquiring unit, configured to: when the random access preamble detection unit detects the first random access preamble, acquire a first receiving moment, wherein the first receiving moment is a moment at which the random access preamble detection unit detects the first random access preamble, wherein the time information acquiring unit is further configured to acquire a second receiving moment, wherein the second receiving moment is a moment at which the second base station detects the first random access preamble; and

that the time difference calculation unit is configured to acquire the first time difference according to non-contention based random access of first user equipment UE handed over between the first base station and the second base station comprises:

> calculating the first time difference according to the first receiving moment and the second receiving moment that are acquired by the time information acquiring unit.

**38.** The base station according to claim 36 or 37, further comprising:

> a mobility management unit, configured to: send a handover request message to the second base station according to a neighboring cell measurement report of the first UE, and send a handover command message to the first UE after receiving a handover request acknowledgement message sent by the second base station, so that the first UE initiates random access to the second base station according to the first random access preamble, wherein the handover request acknowledgement message and the handover command message carry an index of the first random access preamble, and the first random access preamble is a non-contention based random access preamble that is allocated to the first UE by the second base station, wherein
> the random access preamble detection unit is further configured to: after the mobility management unit receives the handover request acknowledgement message sent by the second base station, enable detection of a random access preamble.

**39.** The base station according to claim 38, further comprising:

> a random access preamble management unit, configured to allocate a second random access preamble to the first UE; and
> a resource mapping unit, configured to: after the mobility management unit sends the handover request message to the second base station, send a physical downlink control channel order PDCCH Order to the first UE, wherein the PDCCH Order carries an index of the second random access preamble, so that the first UE initiates active random access to the first base station according to the second random access preamble after receiving the PDCCH Order, wherein
> the random access preamble detection unit is further configured to detect the second random access preamble;
> the time information acquiring unit is further configured to acquire a first transmission delay from the first UE to the first base station by using the second random access preamble detected by the random access preamble detection unit;
> that the time information acquiring unit is further configured to acquire the second receiving moment comprises:
>
>> acquiring the second receiving moment and a second transmission delay, wherein the second transmission delay is a transmission delay from the first UE to the second base station; and
>> that the time difference calculation unit is configured to acquire the first time difference comprises:
>
> calculating the first time difference according to the first receiving moment, the first transmission delay, the second receiving moment, and the second transmission delay.

**40.** The base station according to claim 38 or 39, wherein the mobility management unit is further configured to:

> receive a user resource release message sent by the second base station, wherein the user resource release message carries the second receiving moment, or the second receiving moment and the second transmission delay, so that the time information acquiring unit acquires the second receiving moment, or the second receiving moment and the second transmission delay.

**41.** The base station according to claim 37, wherein that the time difference calculation unit is configured to calculate the first time difference according to the first receiving moment and the second receiving moment that are acquired by the time information acquiring unit comprises:

calculating the first time difference according to First time difference = (Second receiving moment – First receiving moment);

or

calculating the first time difference according to First time difference = (First receiving moment – Second receiving moment).

42. The base station according to claim 39, wherein that the time difference calculation unit is configured to calculate the first time difference according to the first receiving moment, the first transmission delay, the second receiving moment, and the second transmission delay comprises:

calculating the first time difference according to First time difference = (Second receiving moment – First receiving moment) – (Second transmission delay – First transmission delay);

or

calculating the first time difference according to First time difference = (First receiving moment – Second receiving moment) – (First transmission delay – Second transmission delay).

43. The base station according to claim 39, wherein that the time difference calculation unit is configured to calculate the first time difference according to the first receiving moment, the first transmission delay, the second receiving moment, and the second transmission delay comprises:

calculating the first time difference according to First time difference = (Second receiving moment – First receiving moment) + (Second transmission delay – First transmission delay);

or

calculating the first time difference according to First time difference = (First receiving moment – Second receiving moment) + (First transmission delay – Second transmission delay).

44. The base station according to any one of claims 36 to 43, further comprising:

an adjustment value acquiring unit, configured to: when the reference base station is the second base station, acquire the time adjustment value sent by the second base station; and
a time adjustment unit, configured to perform time adjustment according to the time adjustment value acquired by the adjustment value acquiring unit.

**45.** Abase station, which serves as a second base station, comprising:

a time adjustment value processing unit, configured to: acquire at least one time difference, and acquire a time adjustment value of a non-reference base station according to the at least one time difference and reference time of a reference base station, wherein the time difference is a time difference between the first base station and the second base station, and the at least one time difference comprises a first time difference, wherein the first time difference is a time difference acquired according to non-contention based random access of first user equipment UE handed over between the first base station and the second base station, the reference base station is the second base station, and the non-reference base station is the first base station, or the reference base station is the first base station, and the non-reference base station is the second base station; and
an adjustment value sending unit, configured to send the time adjustment value acquired by the time adjustment value processing unit to the non-reference base station.

**46.** The base station according to claim 45, wherein that the time adjustment value processing unit is configured to acquire a time adjustment value of a non-reference base station according to the at least one time difference and reference time of a reference base station comprises:

if the time adjustment value processing unit acquires at least two time differences, performing averaging processing on the at least two time differences, or performing averaging processing on two time differences with a minimum difference, or removing a largest value and a smallest value of the multiple time differences and performing averaging processing on remaining time differences; and acquiring the time adjustment value of the non-reference base station according to the time difference obtained after the averaging processing and the reference time of the reference base station.

**47.** The base station according to claim 45 or 46, wherein that the adjustment value sending unit is configured to send the time adjustment value to the non-reference base station comprises:

determining, according to the time adjustment value, whether the non-reference base station needs to perform time adjustment, and if the non-reference base station needs to perform time adjustment, sending the time adjustment value to the non-reference base station.

**48.** The base station according to any one of claims 45 to 47, further comprising:

a random access preamble management unit, configured to allocate a first random access preamble to the first UE, wherein the first random access preamble is a non-contention based random access preamble that is used to perform handover of the first UE between the first base station and the second base station;
a mobility management unit, configured to: after receiving a handover request message sent by the first base station, send a handover request acknowledgement message to the first base station, so that the first base station enables detection of a random access preamble, wherein the handover request acknowledgement message carries an index of the first random access preamble that is allocated to the first UE by the random access preamble management unit;
a random access preamble detection unit, configured to detect the first random access preamble; and
a time information acquiring unit, configured to acquire a second receiving moment by using the first random access preamble detected by the random access preamble detection unit, wherein
the mobility management unit is further configured to send the second receiving moment acquired by the time information acquiring unit to the first base station, so that the first base station acquires the first time difference between the first base station and the second base station.

**49.** The base station according to claim 48, wherein that the time information acquiring unit is configured to acquire a second receiving moment by using the first random access preamble detected by the random access preamble detection unit comprises:

acquiring the second receiving moment and a second transmission delay by using the first random access preamble detected by the random access preamble detection unit, wherein the second transmission delay is a transmission delay from the first UE to the second base station; and

that the mobility management unit is configured to send the second receiving moment acquired by the time information acquiring unit to the first base station comprises:

sending the second receiving moment and the second transmission delay that are acquired by the time information acquiring unit to the first base station.

**50.** The base station according to claim 48, wherein that the mobility management unit is configured to send the second receiving moment to the first base station comprises:

sending a user resource release message to the first base station after the first UE is handed over to the second base station, wherein the user resource release message carries the second receiving moment.

**51.** The base station according to claim 49, wherein that the mobility management unit is configured to send the second receiving moment and the second transmission delay to the first base station comprises:

sending a user resource release message to the first base station after the first UE is handed over to the second base station, wherein the user resource release message carries the second receiving moment and the second transmission delay.

**52.** The base station according to any one of claims 45 to 51, further comprising:

an adjustment value acquiring unit, configured to: when the reference base station is the first base station, acquire the time adjustment value sent by the adjustment value sending unit; and

a time adjustment unit, configured to perform time adjustment according to the time adjustment value acquired by the adjustment value acquiring unit.

**53.** An air-interface-based synchronization method, comprising:

acquiring, by a first base station, a first time difference, wherein the first time difference is a time difference acquired according to non-contention based random access of first user equipment UE handed over between the first base station and a second base station; and

sending, by the first base station, the first time difference to the second base station, so that the second base station acquires a time adjustment value of a non-reference base station according to acquired at least one time difference and reference time of a reference base station, wherein the at least one time difference comprises the first time difference, and the reference base station is the first base station and the non-reference base station is the second base station, or the reference base station is the second base station and the non-reference base station is the first base station.

**54.** The air-interface-based synchronization method according to claim 53, wherein the acquiring a first time difference comprises:

calculating, by the first base station, the first time difference between the first base station and the second base station according to a first receiving moment and a second receiving moment, wherein the first receiving moment is a moment at which the first base station detects the first random access preamble, and the second receiving moment is a moment at which the second base station detects the first random access preamble; and receiving, by the first base station, the second receiving moment sent by the second base station, wherein the first random access preamble is a non-contention based random access preamble that is used to perform handover of the first UE between the first base station and the second base station.

**55.** The air-interface-based synchronization method according to claim 53, wherein the acquiring a first time difference comprises:

calculating, by the first base station, the first time difference according to the first receiving moment, a first transmission delay, the second receiving moment, and a second transmission delay, wherein the first receiving moment is a moment at which the first base station receives the first random access preamble, the first transmission delay is a transmission delay from the first UE to the first base station, the second receiving moment is a moment at which the second base station receives the first random access preamble, and the second transmission delay is a transmission delay from the first UE to the second base station.

**56.** The air-interface-based synchronization method according to any one of claims 53 to 55, wherein the acquiring a first time difference further comprises:

sending, by the first base station, a handover request message to the second base station according to a neighboring cell measurement report of the first UE; and after receiving a handover request acknowledgement message sent by the second base station, enabling, by the first base station, detection of a random access preamble and sending a handover command message to the first UE, so that the first UE initiates random access to the second base station according to the first random access preamble, wherein the handover request acknowledgement message and the handover command message carry an index of the first random access preamble that is allocated to the first UE by the second base station.

**57.** The air-interface-based synchronization method according to claim 55 or 56, wherein the calculating, by the first base station, the first time difference according to the first receiving moment, a first transmission delay, the second receiving moment, and a second transmission delay further comprises:

after sending the handover request message to the second base station, triggering, by the first base station, the first UE to initiate random access and acquiring the first transmission delay from the first UE to the first base station.

**58.** The air-interface-based synchronization method according to claim 57, wherein the triggering the first UE to initiate random access and acquiring the first transmission delay from the first UE to the first base station comprises:

sending, by the first base station, a physical downlink control channel order PDCCH Order to the first UE, wherein the PDCCH Order carries an index of a second random access preamble that is allocated to the first UE by the first base station, so that the first UE initiates random access to the first base station according to a second random access preamble after receiving the PDCCH Order; and when the first base station detects the second random access preamble, acquiring the first transmission delay from the first UE to the first base station.

**59.** The air-interface-based synchronization method according to claim 54, wherein the calculating, by the first base station, the first time difference between the first base station and the second base station according to a first receiving moment and a second receiving moment further comprises:

receiving, by the first base station, a user resource release message sent by the second base station, wherein the user resource release message carries the second receiving moment.

**60.** The air-interface-based synchronization method according to claim 55, wherein the calculating, by the first base station, the first time difference according to the first receiving moment, a first transmission delay, the second receiving moment, and a second transmission delay further comprises:

receiving, by the first base station, a user resource release message sent by the second base station, wherein the user resource release message carries the second receiving moment and the second transmission delay.

**61.** The air-interface-based synchronization method according to claim 53 or 54, wherein the calculating, by the first base station, the first time difference between the first base station and the second base station according to a first receiving moment and a second receiving moment comprises:

calculating the first time difference according to First time difference = (Second receiving moment - First receiving moment); or
calculating the first time difference according to First time difference = (First receiving moment - Second receiving moment).

**62.** The air-interface-based synchronization method according to any one of claims 55 to 58, wherein the acquiring the first time difference according to the first receiving moment, the first transmission delay, the second receiving moment, and the second transmission delay comprises:

calculating the first time difference according to First time difference = (Second receiving moment – First receiving moment) – (Second transmission delay – First transmission delay);

or

calculating the first time difference according to First time difference = (First receiving moment – Second receiving moment) – (First transmission delay – Second transmission delay).

63. The air-interface-based synchronization method according to any one of claims 55 to 58, comprising:

calculating the first time difference according to First time difference = (Second receiving moment – First receiving moment) + (Second transmission delay – First transmission delay);

or

calculating the first time difference according to First time difference = (First receiving moment – Second receiving moment) + (First transmission delay – Second transmission delay).

64. The air-interface-based synchronization method according to any one of claims 53 to 64, further comprising:

when the reference base station is the second base station, acquiring the time adjustment value sent by the second base station; and performing time adjustment according to the adjustment value.

65. An air-interface-based synchronization method, comprising:

acquiring, by a second base station, at least one time difference, wherein the time difference is a time difference between a first base station and the second base station, and the at least one time difference comprises a first time difference, wherein the first time difference is a time difference acquired according to non-contention based random access of first user equipment UE handed over between the first base station and the second base station;
acquiring, by the second base station, a time adjustment value of a non-reference base station according to the at least one time difference and reference time of a reference base station, wherein the reference base station is the second base station, and the non-reference base station is the first base station, or the reference base station is the first base station, and the non-reference base station is the second base station; and sending, by the second base station, the time adjustment value to the non-reference base station, wherein when the reference base station is the second base station, the time adjustment value is sent to the first base station, or when the reference base station is the first base station, the time adjustment value is sent to the second base station.

66. The air-interface-based synchronization method according to claim 65, wherein the acquiring, by the second base station, a time adjustment value of a non-reference base station according to the at least one time difference and reference time of a reference base station comprises:

if the second base station acquires at least two time differences, performing averaging processing on the at least two time differences, or performing averaging processing on two time differences with a minimum difference, or removing a largest value and a smallest value of the multiple time differences and performing averaging processing on remaining time differences; and acquiring the time adjustment value of the non-reference base station according to the time difference obtained after the averaging processing and the reference time of the reference base station.

67. The air-interface-based synchronization method according to claim 65 or 66, wherein the sending, by a central controller, the time adjustment value to the non-reference base station comprises:

determining, by the central controller according to the time adjustment value, whether the second base station needs to perform time adjustment, and if the second base station needs to perform time adjustment, sending the time adjustment value to the second base station.

68. The air-interface-based synchronization method according to any one of claims 65 to 67, further comprising:

after receiving a handover request message sent by the first base station, sending, by the second base station, a handover request acknowledgement message to the first base station, so that the first base station enables detection of a random access preamble, wherein the handover request acknowledgement message carries an index of a first random access preamble that is allocated to the first user equipment UE by the second base station, and the first random access preamble is a non-contention based random access preamble that is used to perform handover of the first UE between the first base station and the second base station; and acquiring, by the second base station by detecting the first random access preamble, a second receiving moment and sending the second receiving moment to the first base station, so that the first base station acquires the first time difference between the first base station and the second base station, wherein the second receiving moment is a moment at which the second base station detects the first random access preamble.

69. The air-interface-based synchronization method according to claim 68, wherein the acquiring, by the second base station by detecting the first random access preamble, a second receiving moment and sending the second receiving moment to the first base station comprises:

acquiring, by the second base station by detecting the first random access preamble, the second receiving moment and a second transmission delay and sending the second receiving moment and the second transmission delay to the first base station, wherein the second transmission delay is a transmission delay from the first UE to the second base station.

70. The air-interface-based synchronization method according to claim 68, wherein the sending the second receiving moment to the first base station comprises:

sending, by the second base station, a user resource release message to the first base station after the first UE is handed over to the second base station, wherein the user resource release message carries the second receiving moment.

71. The air-interface-based synchronization method according to claim 69, wherein the sending the second receiving moment and the second transmission delay to the first base station comprises:

sending, by the second base station, a user resource release message to the first base station after the first UE is handed over to the second base station, wherein the user resource release message carries the second receiving moment and the second transmission delay.

72. The base station according to any one of claims 65 to 71, further comprising:

when the reference base station is the first base station, performing, by the second base station, time adjustment according to the time adjustment value.

**73.** A wireless communications system, comprising:

the central controller device according to any one of claims 1 to 3, the base station according to any one of claims 4 to 11, and the base station according to any one of claims 12 to 16.

**74.** A wireless communications system, comprising:

the base station according to any one of claims 36 to 44 and the base station according to any one of claims 45 to 52.

FIG. 1

FIG. 2

S301

Acquire at least one time difference, where the time difference is a time difference between a first base station and a second base station

S302

Acquire a time adjustment value of the second base station according to the at least one time difference and reference time of the first base station, where the first base station is a reference base station, and the second base station is a non-reference base station

S303

Send the time adjustment value to the second base station

FIG. 3

S401

Acquire a first time difference according to non-contention based random access of first user equipment UE handed over between a first base station and a second base station, where the first base station is a reference base station, and the second base station is a non-reference base station

S402

The first base station sends the first time difference to a central controller, so that the central controller acquires a time adjustment value of the second base station according to acquired at least one time difference and reference time of the first base station, where the at least one time difference includes the first time difference

FIG. 4

S501

Acquire a time adjustment value sent by a central controller

S502

Perform time adjustment according to the time adjustment value

FIG. 5

| Second base station | | UE | | First base station | Central controller |

S601: Handover request

S602: Handover request acknowledgement

S603: Initiate detection of a random access preamble

S604: Handover command

S605: The UE initiates random access to the second base station

S606(b): Detect the random access preamble, and acquire a moment at which the second base station detects the preamble

S606(a): Detect the random access preamble, and acquire a moment at which the first base station detects the preamble

S607: Resource release (carrying a moment at which the second base station detects the preamble)

S608: Acquire a time difference between the first base station and the second base station

S609: Time difference

S610: Acquire a time adjustment value of a non-reference base station

S611: Time adjustment value

S612: Time adjustment

FIG. 6

| Second base station | | UE | | First base station | Central controller |
|---|---|---|---|---|---|

S601: Handover request

S701: PDCCH Order

S702: The UE initiates random access to the first base station

S703: Detect a random access preamble, and acquire a transmission delay from UE to the first base station

S602: Handover request acknowledgement

S603: Initiate detection of a random access preamble

S606(b): Detect the random access preamble, and acquire a moment at which the second base station detects the preamble and a transmission delay from the UE to the second base station

S604: Handover command

S605: The UE initiates random access to the second base station

S606(a): Detect the random access preamble, and acquire a moment at which the first base station detects the preamble

S607: Resource release (carrying the moment at which the second base station detects the preamble and the transmission delay from the UE to the second base station)

S608: Acquire a time difference between the first base station and the second base station

S609: Time difference

S610: Acquire a time adjustment value of a non-reference base station

S611: Time adjustment value

S612: Time adjustment

FIG. 7

S801

Acquire a first time difference according to non-contention based random access of first UE handed over between a first base station and a second base station

S802

The first base station sends the first time difference to the second base station, so that the second base station acquires a time adjustment value of a non-reference base station according to acquired at least one time difference and reference time of a reference base station, where the at least one time difference includes the first time difference

FIG. 8

S901

Acquire at least one time difference, where the time difference is a time difference between a first base station and a second base station

S902

Acquire a time adjustment value of a non-reference base station according to the at least one time difference and reference time of a reference base station, where the reference base station is the second base station, and the non-reference base station is the first base station, or the reference base station is the first base station, and the non-reference base station is the second base station

S903

Send the time adjustment value to the non-reference base station

FIG. 9

FIG. 10

**101**

```
┌─────────────────────────────────────┐
│                                      │
│      1101              1103          │
│   ┌──────────┐     ┌──────────┐      │
│   │ Processor│     │ Interface│      │
│   └────┬─────┘     └────┬─────┘      │
│        │                │            │
│   ─────┴────────────────┴─────       │
│        │                             │
│   ┌────┴──────┐    1102              │
│   │  Memory   │                      │
│   └───────────┘                      │
│                                      │
└─────────────────────────────────────┘
```

FIG. 11

**102**

```
┌─────────────────────────────────────┐
│                                      │
│      1201              1204          │
│   ┌──────────┐     ┌──────────┐      │
│   │ Processor│     │ Interface│      │
│   └────┬─────┘     └────┬─────┘      │
│        │                │            │
│   ─────┴────────────────┴─────  1203 │
│        │                │            │
│   ┌────┴──────┐    ┌────┴──────┐     │
│   │  Memory   │1202│Transceiver│──Y  │
│   └───────────┘    └───────────┘     │
│                                      │
└─────────────────────────────────────┘
```

FIG. 12

FIG. 13

FIG. 14

FIG. 15

<table>
<tr><td colspan="2"><h1>INTERNATIONAL SEARCH REPORT</h1></td><td>International application No.<br>PCT/CN2013/078572</td></tr>
</table>

**A. CLASSIFICATION OF SUBJECT MATTER**

H04W 56/00 (2009.01) i

According to International Patent Classification (IPC) or to both national classification and IPC

**B. FIELDS SEARCHED**

Minimum documentation searched (classification system followed by classification symbols)

IPC: H04Q; H04L; H04M; G06F; H04W

Documentation searched other than minimum documentation to the extent that such documents are included in the fields searched

Electronic data base consulted during the international search (name of data base and, where practicable, search terms used)

WPI; EPODOC; CNKI; CNPAT: time difference, offset, frame, bit, slot, reference, base station, handoff, handover, hand off, hand over, random access, average, delay, pilot, synchroni+, lead+

**C. DOCUMENTS CONSIDERED TO BE RELEVANT**

| Category* | Citation of document, with indication, where appropriate, of the relevant passages | Relevant to claim No. |
|---|---|---|
| X | CN 101035327 A (HUAWEI TECHNOLOGIES CO., LTD.) 12 September 2007 (12.09.2007) description, page 8, the fourth paragraph to page 13, the third paragraph, and figures 2, and 4-6 | 1-74 |
| A | WO 2012075940 A1 (HUAWEI TECHNOLOGIES CO., LTD.) 14 June 2012 (14.06.2012) the whole document | 1-74 |
| A | CN 101400079 A (DATANG MOBILE COMM. EQUIP CO., LTD.) 01 April 2009 (01.04.2009) the whole document | 1-74 |
| A | CN 201970741 A (COMBA TELECOM SYS CHINA CO., LTD.) 13 March 2012 (13.03.2012) the whole document | 1-74 |

☐ Further documents are listed in the continuation of Box C. ☒ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 10 March 2014 (10.03.2014) | 27 March 2014 (27.03.2014) |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>YI, Shuiying<br><br>Telephone No. (86-10) 61648256 |
|---|---|

Form PCT/ISA /210 (second sheet) (July 2009)

## INTERNATIONAL SEARCH REPORT
### Information on patent family members

| | International application No. |
|---|---|
| | PCT/CN2013/078572 |

| Patent Documents referred in the Report | Publication Date | Patent Family | Publication Date |
|---|---|---|---|
| CN 101035327 A | 12.09.2007 | WO 2008125052 A1 | 23.10.2008 |
| | | EP 2106157 A1 | 30.09.2009 |
| | | CN 101188812 A | 28.05.2008 |
| | | CN 102595588 A | 18.07.2012 |
| WO 2012075940 A1 | 14.06.2012 | CN 102547961 A | 04.07.2012 |
| | | US 2013265992 A1 | 10.10.2013 |
| | | EP 2651049 A1 | 16.10.2013 |
| CN 101400079 A | 01.04.2009 | None | |
| CN 102970741 A | 13.03.2013 | None | |

Form PCT/ISA /210 (patent family annex) (July 2009)